# EUROPEAN PATENT APPLICATION

(11) **EP 4 600 794 A1**
(43) Date of publication of application: **13.08.2025**
(21) Application number: 24744314.6
(22) Date of filing: 17.01.2024
(51) Int. Cl.: G06F 3/044

(54) **TOUCH-CONTROL MODULE, ELECTRONIC DEVICE, TOUCH-CONTROL ACCESSORY AND TOUCH-CONTROL DETECTION METHOD**

(30) Priority: 18.01.2023 CN 202310086230; 12.05.2023 CN 202310544109
(71) Applicant: Huawei Technologies Co., Ltd., Shenzhen, Guangdong 518129 (CN)
(72) Inventor: YAO, Haicheng, Shenzhen, Guangdong 518129 (CN); LI, Wei, Shenzhen, Guangdong 518129 (CN); CAI, Min, Shenzhen, Guangdong 518129 (CN); LU, Shuping, Shenzhen, Guangdong 518129 (CN); DU, Linghao, Shenzhen, Guangdong 518129 (CN); ZHOU, Wei, Shenzhen, Guangdong 518129 (CN); LI, Ting, Shenzhen, Guangdong 518129 (CN)
(74) Representative: Pfenning, Meinig & Partner mbB
(86) International application number: PCT/CN2024/072819
(87) International publication number: WO 2024/153140

(57) **Abstract**

This application provides a touch module, an electronic device, a touch accessory, and a touch detection method. The touch module includes a touch capacitive layer and a pressure sensing layer. The touch capacitive layer and the pressure sensing layer are disposed opposite to each other. The touch capacitive layer is configured to output a capacitance signal, and the capacitance signal is used to determine a touch location of a touch operation. The pressure sensing layer is configured to change under an action of touch pressure, and a signal value of the capacitance signal is related to a variation of the pressure sensing layer. **In** the solutions of this application, the touch location can be determined and the touch pressure can be detected based on a single type of capacitance signal. This reduces complexity of the touch module.

## Description

This application claims priorities to Chinese Patent Application No. 202310086230.3, filed with the China National Intellectual Property Administration on January 18, 2023 and entitled "TOUCH MODULE, ELECTRONIC DEVICE, TOUCH ACCESSORY, AND TOUCH DETECTION METHOD", and to Chinese Patent Application No. 202310544109.0, filed with the China National Intellectual Property Administration on May 12, 2023 and entitled "TOUCH MODULE, ELECTRONIC DEVICE, TOUCH ACCESSORY, AND TOUCH DETECTION METHOD", both of which are incorporated herein by reference in their entireties.

### TECHNICAL FIELD

This application relates to the field of touch technologies, and more specifically, to a touch module, an electronic device, a touch accessory, and a touch detection method.

### BACKGROUND

Currently, a capacitive touch apparatus is widely used in an electronic device like a personal computer, a tablet computer, a mobile phone, or a watch. The capacitive touch apparatus senses, according to a principle of impact of a conductor (for example, a human finger) on electric field distribution around a capacitive sensor, whether a user touches a surface of the apparatus and determines a touch location. The electronic device may identify, based on the touch location of the user on the surface of the apparatus, an operation like tapping, touching and holding, or sliding performed by the user, to implement a function corresponding to the operation. A magnitude of pressing force of the user is further identified on the surface of the apparatus, so that richer human-computer interaction experience can be achieved, and interaction efficiency can be improved. However, sensing of the magnitude of the pressure usually needs to be implemented by introducing an additional pressure sensor, which increases complexity of a circuit system.

### SUMMARY

This application provides a touch module, an electronic device, a touch accessory, and a touch detection method, to determine a touch location and detect touch pressure based on a single type of capacitance signal, thereby reducing complexity of the touch module.

According to a first aspect, a touch module is provided, including a touch capacitive layer and a pressure sensing layer. The touch capacitive layer and the pressure sensing layer are disposed opposite to each other. The touch capacitive layer is configured to output a capacitance signal, and the capacitance signal is used to determine a touch location of a touch operation. The pressure sensing layer is configured to change under an action of touch pressure, and a signal value of the capacitance signal is related to a variation of the pressure sensing layer.

For example, the touch capacitive layer may be a self-capacitance capacitive layer, or may be a mutual-capacitance capacitive layer.

For example, the touch capacitive layer may include a two-dimensional touch electrode array, and a plurality of touch electrodes in the two-dimensional touch electrode array are self-capacitance touch electrodes.

For another example, the touch capacitive layer may include a two-dimensional touch electrode array, and a plurality of touch electrodes in the two-dimensional touch electrode array are mutual-capacitance touch electrodes.

In the solution in this embodiment of this application, the pressure sensing layer may change under the action of the touch pressure. As a result, the signal value of the capacitance signal output by the touch capacitive layer is affected. The signal value of the capacitance signal may be used to indicate a magnitude of the touch pressure, so that the touch pressure can be detected, and an operation related to the touch pressure can be implemented. This helps improve user experience. For example, the touch pressure of the touch operation is determined, and an instruction of a user is implemented based on the touch pressure, to avoid a problem like an accidental touch. The capacitance signal output by the touch capacitive layer may be used to implement touch sensing, determine the touch location, and detect the touch pressure. To be specific, touch sensing and touch pressure detection can be implemented based on a single type of capacitance signal, and no additional pressure sensing module device like another pressure sensor needs to be introduced. This reduces costs. In addition, in some implementations, the pressure sensing layer and the touch capacitive layer do not need to be connected through a circuit. This reduces complexity of a structure of the touch module. In addition, the touch pressure is determined based on the signal value of the capacitance signal. This can reduce algorithm complexity and helps implement fast detection.

In addition, if the touch capacitive layer can determine a multi-touch location, for example, the touch capacitive layer is a mutual inductance capacitive layer, the solution in this embodiment of this application can implement multi-point pressure detection. This helps further improve user experience. For example, when a plurality of fingers of the user perform a touch operation, touch pressure at a touch location corresponding to each finger may be separately detected.

With reference to the first aspect, in some implementations of the first aspect, the pressure sensing layer includes at least one of the following: a first pressure sensing layer or a second pressure sensing layer. The first pressure sensing layer is configured to change a thickness under the action of the touch pressure, and the second pressure sensing layer is configured to change a resistance value under the action of the touch pressure.

The first pressure sensing layer is configured to reduce a thickness at the touch location under the action of the touch pressure.

For example, a material of the first pressure sensing layer may be a polymer, for example, PDMS or PU.

In this embodiment of this application, the first pressure sensing layer may convert the touch pressure into a change of the thickness, to change the signal value of the capacitance signal. The second pressure sensing layer may convert the touch pressure into a change of the resistance value, to change the signal value of the capacitance signal.

In addition, when different regions at the first pressure sensing layer are under pressure, the regions under pressure are all deformed, so that signal values of capacitance signals in the different regions change correspondingly, to implement multi-point pressure detection.

In addition, when different regions at the second pressure sensing layer are under pressure, resistance values of the regions under pressure change, so that signal values of capacitance signals in the different regions change correspondingly, to implement multi-point pressure detection.

With reference to the first aspect, in some implementations of the first aspect, the pressure sensing layer is closer to the touch operation than the touch capacitive layer.

In this embodiment of this application, the first pressure sensing layer may convert the touch pressure into a change of a distance between the touch operation and the touch capacitive layer, to change the signal value of the capacitance signal. The second pressure sensing layer may convert the touch pressure into a change of a resistance value between the touch operation and the touch capacitive layer, to change the signal value of the capacitance signal.

With reference to the first aspect, in some implementations of the first aspect, the touch module further includes a first substrate, and the first substrate is located between the touch capacitive layer and the pressure sensing layer.

With reference to the first aspect, in some implementations of the first aspect, the pressure sensing layer further includes a first conducting layer, and the first conducting layer is located on a side that is of the first pressure sensing layer and that is close to the first substrate.

In this embodiment of this application, the conducting layer is introduced. Under same touch pressure, after the conducting layer is introduced, a variation of the capacitance value of the touch capacitive layer is larger, and sensitivity of the touch module for pressure sensing under same pressure is increased. Further, the first pressure sensing layer may be a thin film with a flat surface and without any structural feature, and the first conducting layer may be made of a transparent conducting material. This improves light transmission of the pressure sensing layer, and helps apply the touch module to a scenario in which light transmission is required. In this way, sensitivity of the touch module for pressure sensing can be improved while light transmission is ensured.

With reference to the first aspect, in some implementations of the first aspect, the touch module further includes a second substrate, the second substrate is located on a side that is of the pressure sensing layer and that is away from the touch capacitive layer, and a side that is of the second substrate and that is away from the pressure sensing layer is configured to be in contact with the touch operation.

For example, the second substrate may be a soft film substrate. The soft film substrate may also be referred to as a flexible substrate.

For example, a material of the second substrate may be any one of the following: polyimide, PE, PET, TPU, PVC, OCA, or the like.

In this embodiment of this application, the second substrate may protect the pressure sensing layer, for example, waterproof and dustproof. In addition, disposing the second substrate helps improve user experience. For example, the second substrate is made of a non-conductive material. In this way, discomfort caused by a current that may occur when the user performs the touch operation can be avoided. For another example, limited by various factors like a function of the pressure sensing layer, a surface of the pressure sensing layer may be a non-smooth surface. In this case, the side that is of the second substrate and that is in contact with the external environment may be disposed as a smooth surface. This can improve operation experience of the user.

With reference to the first aspect, in some implementations of the first aspect, the touch module further includes a third substrate. The third substrate is located on a side that is of the touch capacitive layer and that is away from the pressure sensing layer, and a side that is of the third substrate and that is away from the touch capacitive layer is configured to be in contact with the touch operation. The pressure sensing layer further includes a second conducting layer, and the second conducting layer is located on a side that is of the pressure sensing layer and that is away from the touch capacitive layer.

The second conducting layer may be a grounded conducting layer.

In the solution of this embodiment of this application, the first pressure sensing layer may convert the touch pressure into a change of a distance between the touch capacitive layer and the second conducting layer, to change the signal value of the capacitance signal. The second pressure sensing layer may convert the touch pressure into a change of a resistance value between the touch capacitive layer and the second conducting layer, to change the signal value of the capacitance signal.

With reference to the first aspect, in some implementations of the first aspect, a Young's modulus of the first pressure sensing layer is less than or equal to 100 Mpa.

With reference to the first aspect, in some implementations of the first aspect, the side that is of the first pressure sensing layer and that is away from the touch operation includes a plurality of protrusion structures protruding toward a direction opposite to the first pressure sensing layer.

For example, a size of the protrusion structure may be at a micron level.

With reference to the first aspect, in some implementations of the first aspect, the protrusion structure may be a pyramid structure, a hemispherical structure, a columnar structure, or a cuboid structure.

With reference to the first aspect, in some implementations of the first aspect, a bottom area of a side that is of the protrusion structure and that is away from the first pressure sensing layer is less than a bottom area of a side that is of the protrusion structure and that is close to the first pressure sensing layer.

For example, the protrusion structure may be a pyramid structure, a hemispherical structure, or the like.

In this embodiment of this application, when the bottom area of the side that is of the protrusion structure at the first pressure sensing layer and that is away from the first pressure sensing layer is small, in comparison with a case in which the protrusion structure at the first pressure sensing layer has another configuration, when same touch pressure is applied, a contact area of the top is smaller. For example, a contact area between the top and the first substrate is smaller, and internal stress in the region is larger, so that the structure can generate larger compression and deformation. In other words, when same touch pressure is applied, a thickness change of the pressure sensing layer having the foregoing protrusion structure is more obvious, and a distance between the touch operation and the touch capacitive layer is shorter, so that a variation of the capacitance value is larger. In this way, sensitivity of the touch module for touch pressure sensing under the same pressure can be increased.

With reference to the first aspect, in some implementations of the first aspect, the plurality of protrusion structures are spaced from each other.

According to the solution in this embodiment of this application, in comparison with a case in which the plurality of protrusion structures are adjacently arranged, when the plurality of protrusion structures are spaced from each other, a contact area of the top of the protrusion structure per unit area is smaller. When same touch pressure is applied, larger compression and deformation can be generated, so that a variation of the capacitance value is larger. In this way, sensitivity of the touch module for pressure sensing under the same pressure can be increased. A degree to which the capacitance value changes with a magnitude of the touch pressure may be adjusted by adjusting a spacing between the protrusion structures, that is, sensitivity of the touch module for pressure sensing may be adjusted.

With reference to the first aspect, in some implementations of the first aspect, the plurality of protrusion structures are a same protrusion structure.

According to the solution in this embodiment of this application, when the same protrusion structure is used, light transmission of the pressure sensing layer is better. This helps apply the touch module to a scenario in which light transmission is required, for example, a touchscreen.

With reference to the first aspect, in some implementations of the first aspect, the first pressure sensing layer includes a plurality of hollow structures.

The hollow structure may also be referred to as a cavity.

For example, a size of the hollow structure may be at a micron level.

According to the solution in this embodiment of this application, the hollow structure inside the first pressure sensing layer can improve compressibility of the first pressure sensing layer. Compared with a first pressure sensing layer having no hollow structure inside, the first pressure sensing layer having the hollow structure inside can generate larger compression and deformation when same touch pressure is applied, so that a variation of the capacitance value is larger. In this way, sensitivity of the touch module for pressure sensing under the same pressure can be increased.

With reference to the first aspect, in some implementations of the first aspect, a material of the second pressure sensing layer is a composite material having conductive particles, and a concentration of the conductive particles is greater than a permeation threshold.

For example, a size of the conductive particle may be a nanometer-level size.

The conductive particle may be a conductive particle, a conductive nanowire, or the like.

For example, the conductive particle may be a carbon nanoparticle, a carbon nanotube, graphene, a silver nanowire, or the like.

According to a second aspect, an electronic device is provided, including the touch module according to any implementation of the first aspect.

For example, the electronic device includes a tablet computer, a mobile phone, a notebook computer, a watch, a headset, glasses, or the like.

According to a third aspect, a touch accessory is provided, used in a touch module. The touch module is configured to output a capacitance signal, and the capacitance signal is used to determine a touch location of a touch operation. The touch accessory includes a pressure sensing layer and a fourth substrate, and the pressure sensing layer and the fourth substrate are disposed opposite to each other. The pressure sensing layer is configured to change under an action of touch pressure, and a signal value of the capacitance signal is related to a variation of the pressure sensing layer.

In the solution in this embodiment of this application, the pressure sensing layer may change under the action of the touch pressure. As a result, the signal value of the capacitance signal output by the touch module is affected. The signal value of the capacitance signal may be used to indicate a magnitude of the touch pressure. In this embodiment of this application, the touch accessory may cooperate with the touch module to implement a function related to the touch pressure. This helps improve user experience. The capacitance signal output by the touch module may be used to implement touch sensing, determine the touch location, and detect the touch pressure. To be specific, touch sensing and touch pressure detection can be implemented based on a single type of capacitance signal, and no additional pressure sensing component or device like another pressure sensor needs to be introduced. This reduces costs. In addition, the touch pressure is determined based on the signal value of the capacitance signal. This can reduce algorithm complexity and helps implement fast detection.

In addition, if the touch module can determine a multi-touch location, for example, the touch module includes a mutual inductance capacitive layer, the solution in this embodiment of this application can implement multi-point pressure detection. This helps further improve user experience. For example, when a plurality of fingers of a user perform a touch operation, touch pressure at a touch location corresponding to each finger may be separately detected.

With reference to the third aspect, in some implementations of the third aspect, the pressure sensing layer includes at least one of the following: a first pressure sensing layer or a second pressure sensing layer. The first pressure sensing layer is configured to change a thickness under the action of the touch pressure. The second pressure sensing layer is configured to change a resistance value under the action of the touch pressure.

With reference to the third aspect, in some implementations of the third aspect, the pressure sensing layer further includes a first conducting layer. The first conducting layer is located on a side that is of the first pressure sensing layer and that is close to the fourth substrate. The first pressure sensing layer is closer to the touch operation than the first conducting layer.

With reference to the third aspect, in some implementations of the third aspect, a Young's modulus of the first pressure sensing layer is less than or equal to 100 Mpa.

With reference to the third aspect, in some implementations of the third aspect, a side that is of the first pressure sensing layer and that is close to the touch module includes a plurality of protrusion structures protruding toward the touch module.

With reference to the third aspect, in some implementations of the third aspect, a bottom area of a side that is of the protrusion structure and that faces the touch module is less than a bottom area of a side that is of the protrusion structure and that is away from the touch module.

With reference to the third aspect, in some implementations of the third aspect, the plurality of protrusion structures are spaced from each other.

With reference to the third aspect, in some implementations of the third aspect, the plurality of protrusion structures are a same protrusion structure.

With reference to the third aspect, in some implementations of the third aspect, the pressure sensing layer includes a plurality of hollow structures.

With reference to the third aspect, in some implementations of the third aspect, a material of the second pressure sensing layer is a composite material having conductive particles, and a concentration of the conductive particles is greater than a permeation threshold.

With reference to the third aspect, in some implementations of the third aspect, the touch accessory further includes a fifth substrate, and the fifth substrate is located on a side that is of the pressure sensing layer and that is away from the fourth substrate.

With reference to the third aspect, in some implementations of the third aspect, the touch accessory includes any one of the following: a touch screen protector, a stylus, a nib of a stylus, or a cover of a stylus.

According to a fourth aspect, a touch detection method is provided, including: obtaining a capacitance signal output by a touch module, where the capacitance signal is used to determine a touch location of a touch operation, and a signal value of the capacitance signal is related to touch pressure of the touch operation; and sending, based on the signal value of the capacitance signal, an instruction corresponding to the touch operation.

In this embodiment of this application, the signal value of the capacitance signal is related to the touch pressure of the touch operation, and the signal value of the capacitance signal may be used to reflect the touch pressure of the touch operation. An instruction related to the touch pressure may be determined based on the signal value of the capacitance signal, and different instructions may be executed based on different touch pressure applied by a user. This improves user experience. In addition, the capacitance signal may be further used to determine the touch location. In this embodiment of this application, a single type of capacitance signal may be used to reflect the touch pressure and determine the touch location. This reduces a calculation amount and improves processing efficiency.

With reference to the fourth aspect, in some implementations of the fourth aspect, the determining, based on the signal value of the capacitance signal, an instruction corresponding to the touch operation includes: sending, based on the signal value of the capacitance signal and a correspondence between a plurality of ranges of a signal value of a preset capacitance signal and preset instructions, the instruction corresponding to the touch operation.

For example, the instruction may be an operation instruction, for example, an input instruction.

Alternatively, the instruction may instruct a pressure level of the touch pressure.

In this case, the correspondence between the plurality of ranges of the signal value of the preset capacitance signal and the preset instructions may also be understood as a correspondence between the plurality of ranges of the signal value of the preset capacitance signal and the preset pressure levels.

Alternatively, the instruction may instruct a pressure value of the touch pressure. For example, the pressure value of the touch pressure is determined based on the signal value of the capacitance signal and a correspondence between the signal value of the preset capacitance signal and a preset pressure value.

With reference to the fourth aspect, in some implementations of the fourth aspect, the capacitance signal includes a first capacitance signal. When a signal value of the first capacitance signal falls within a first range, the instruction corresponding to the touch operation is a first instruction corresponding to the first range; or when a signal value of the first capacitance signal falls within a second range, the instruction corresponding to the touch operation is a second instruction corresponding to the second range. The first range and the second range belong to the plurality of ranges, and the first range is different from the second range. The first instruction and the second instruction belong to preset instructions, and the first instruction is different from the second instruction.

With reference to the fourth aspect, in some implementations of the fourth aspect, the touch module includes a touch capacitive layer and a pressure sensing layer. The touch capacitive layer and the pressure sensing layer are disposed opposite to each other. The touch capacitive layer is configured to output a capacitance signal, and the pressure sensing layer is configured to change under an action of the touch pressure. A signal value of the capacitance signal is related to a variation of the pressure sensing layer.

With reference to the fourth aspect, in some implementations of the fourth aspect, the pressure sensing layer includes at least one of the following: a first pressure sensing layer or a second pressure sensing layer. The first pressure sensing layer is configured to change a thickness under the action of the touch pressure, and the second pressure sensing layer is configured to change a resistance value under the action of the touch pressure.

With reference to the fourth aspect, in some implementations of the fourth aspect, the pressure sensing layer is closer to the touch operation than the touch capacitive layer.

With reference to the fourth aspect, in some implementations of the fourth aspect, the touch module further includes a first substrate, and the first substrate is located between the touch capacitive layer and the pressure sensing layer. The pressure sensing layer further includes a first conducting layer, and the first conducting layer is located on a side that is of the first pressure sensing layer and that is close to the first substrate.

With reference to the fourth aspect, in some implementations of the fourth aspect, the pressure sensing layer further includes a second conducting layer, and the second conducting layer is located on a side that is of the pressure sensing layer and that is away from the touch capacitive layer. The touch module further includes a third substrate, and the third substrate is located on a side that is of the touch capacitive layer and that is away from the pressure sensing layer. A side that is of the third substrate and that is away from the touch capacitive layer is configured to be in contact with the touch operation.

It should be understood that an extension, a limitation, an explanation, and a description of related content in the first aspect are also applicable to same content in the second aspect to the fourth aspect.

According to a fifth aspect, a computer-readable storage medium is provided, including a computer program instruction. When the computer program instruction is executed by a computing device, the computing device performs the method according to the fourth aspect or any implementation of the fourth aspect.

According to a sixth aspect, a computer program product including instructions is provided. When the instructions are run by a computing device, the computing device is enabled to perform the method according to the fourth aspect or any implementation of the fourth aspect.

### BRIEF DESCRIPTION OF DRAWINGS

FIG. 1 is a diagram of a structure of an electronic device according to an embodiment of this application;
FIG. 2 is a diagram of a structure of a touch module according to an embodiment of this application;
FIG. 3 is a diagram of a structure of another touch module according to an embodiment of this application;
FIG. 4 is a diagram of a structure of still another touch module according to an embodiment of this application;
FIG. 5 is a diagram of pressure sensing layers under different touch pressure according to an embodiment of this application;
FIG. 6 is a diagram of a relationship between touch pressure and a distance according to an embodiment of this application;
FIG. 7 is a diagram of a relationship between touch pressure and a signal value of a capacitance signal according to an embodiment of this application;
FIG. 8 is a diagram of a structure of yet another touch module according to an embodiment of this application;
FIG. 9 is a diagram of a structure of still yet another touch module according to an embodiment of this application;
FIG. 10 is a diagram of a structure of a further touch module according to an embodiment of this application;
FIG. 11 is a diagram of a structure of a still further touch module according to an embodiment of this application;
FIG. 12 is a diagram of a structure of a yet further touch module according to an embodiment of this application;
FIG. 13 is another diagram of pressure sensing layers under different touch pressure according to an embodiment of this application;
FIG. 14 is a diagram of a relationship between touch pressure and a resistance value of a pressure sensing layer according to an embodiment of this application;
FIG. 15 is another diagram of a relationship between touch pressure and a signal value of a capacitance signal according to an embodiment of this application;
FIG. 16 is a diagram of another electronic device according to an embodiment of this application;
FIG. 17 is a schematic flowchart of a touch detection method according to an embodiment of this application;
FIG. 18 is a schematic flowchart of another touch detection method according to an embodiment of this application;
FIG. 19 is a schematic flowchart of still another touch detection method according to an embodiment of this application;
FIG. 20 is a diagram of application scenarios of touch accessories according to an embodiment of this application;
FIG. 21 is a diagram of a structure of a touch accessory according to an embodiment of this application;
FIG. 22 is a diagram of an application scenario of a touch screen protector according to an embodiment of this application;
FIG. 23(a) and FIG. 23(b) are a diagram of another application scenario of a touch screen protector according to an embodiment of this application;
FIG. 24 is a diagram of an application scenario of another touch accessory according to an embodiment of this application;
FIG. 25 is a diagram of a structure of another touch accessory according to an embodiment of this application;
FIG. 26 is a diagram of a structure of a still yet further touch module according to an embodiment of this application;
FIG. 27 is still another diagram of pressure sensing layers under different touch pressure according to an embodiment of this application;
FIG. 28 is a diagram of another relationship between touch pressure and a distance according to an embodiment of this application;
FIG. 29 is still another diagram of a relationship between touch pressure and a signal value of a capacitance signal according to an embodiment of this application;
FIG. 30 is a diagram of even yet another touch module according to an embodiment of this application;
FIG. 31(a), FIG. 31(b), and FIG. 31(c) are a diagram of application scenarios of a touch detection method according to an embodiment of this application; and
FIG. 32 is a schematic flowchart of yet another touch detection method according to an embodiment of this application.

### DESCRIPTION OF EMBODIMENTS

The following describes technical solutions of this application with reference to accompanying drawings.

Solutions provided in embodiments of this application may be applied to a terminal consumer product or a 3C electronic product (a computer (computer) electronic product, a communication (communication) electronic product, or a consumer (consumer) electronic product), for example, a device like a mobile phone, a tablet computer, an e-reader, a notebook computer, a digital camera, a wearable device (like a watch), a headset, or a navigator. It should be understood that this is merely an example. The solutions provided in embodiments of this application may be further applied to another electronic device that provides a touch function.

To better describe the solutions in embodiments of this application, the following first describes possible terms in embodiments of this application.

### (1) Polydimethylsiloxane (Polydimethylsiloxane, PDMS)

The PDMS is a hydrophobic silicone material. Commonly used polysiloxanes mainly include polydimethylsiloxane, cyclo-dimethylsiloxane, cyclmethylsiloxane, aminosiloxane, polymethylphenylsiloxane, polyether polysiloxane copolymer, and the like.

### (2) Polyurethane (polyurethane, PU)

The polyurethane, or polyurethane, is a polymer compound. The polyurethane includes two types: polyester and polyether, and can be made into polyurethane plastic, polyurethane fiber (or referred to as spandex), polyurethane rubber, and elastomer.

### (3) Polyethylene glycol terephthalate (polyethylene glycol terephthalate, PET)

The PET is obtained by transesterifying dimethyl terephthalate and ethylene glycol or by esterifying terephthalic acid and ethylene glycol to synthesize bishydroxyethyl terephthalate, and then performing a polycondensation reaction. The PET is crystalline saturated polyester. It is a highly crystalline polymer in milky white or light yellow. It has a smooth and glossy surface and is common resin in life. It can be classified into APET, RPET, and PETG.

### (4) Polyethylene (polyethylene, PE)

The polyethylene is thermoplastic resin obtained by polymerizing ethylene. In industry, the PE also includes a copolymer of ethylene and a small amount of alpha-olefin. A lowest operating temperature of the polyethylene can reach -100°C to -70°C. The polyethylene has excellent low-temperature resistance, good chemical stability, and can withstand corrosion of most acids and alkalis. The PE is not soluble in general solvents at a room temperature, and has low water absorption and good electrical insulation.

### (5) Thermoplastic polyurethane (thermoplastic polyurethane, TPU)

Thermoplastic polyurethane elastomer is a type of elastomer that can be plasticized by heating and can be dissolved by solvent.

### (6) Polyvinyl chloride (polyvinyl chloride, PVC)

The PVC is a polymer formed by polymerizing vinyl chloride monomer (vinyl chloride monomer, VCM) in an initiator such as a peroxide or an azo compound or according to a free radical polymerization reaction mechanism under light and heat. Vinyl chloride homopolymer and vinyl chloride copolymer are collectively referred to as vinyl chloride resin.

### (7) Force sensitive resistor (force sensitive resistor, FSR)

The force sensitive resistor is a material whose resistance value changes with force, pressure, or mechanical stress. The force sensitive resistor is also referred to as a "force sensitive resistor".

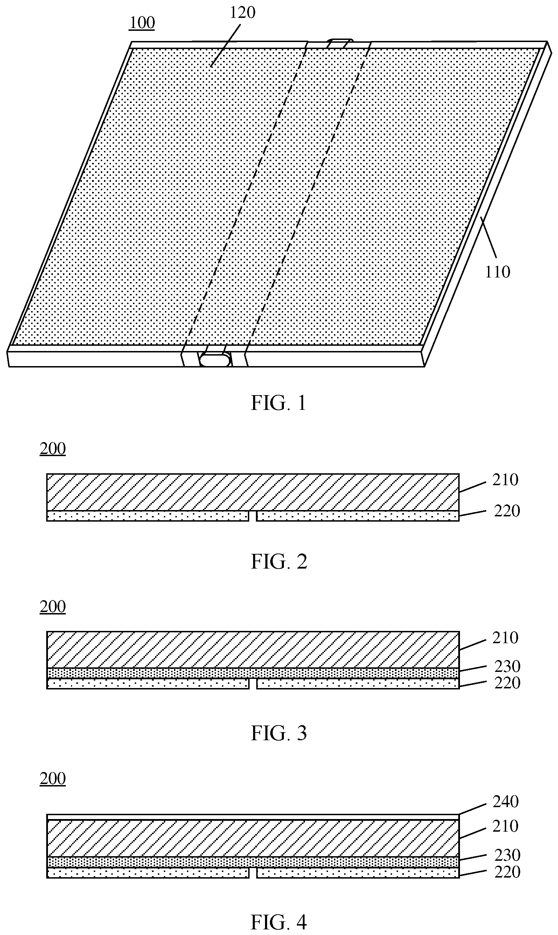

FIG. 1 is a diagram of a structure of an electronic device 100 according to an embodiment of this application. The embodiment shown in FIG. 1 is described by using an example in which the electronic device 100 is a mobile phone.

The electronic device 100 may include a housing and a touch module 120. Specifically, the housing may include a frame 110 and a rear cover. The frame 110 may be located between the touch module 120 and the rear cover. The frame 110 may surround a periphery of the touch module 120 and a periphery of the rear cover. A user may perform a touch operation in a touch region of the touch module 120. The touch module 120 may obtain a capacitance signal. For example, the capacitance signal may include a capacitance signal generated due to the touch operation. The touch region of the touch module 120 may be a region provided by the touch module 120 for the user to perform the touch operation, for example, a shadow region in FIG. 1.

The electronic device 100 further includes a processing module and an execution module (not shown in the figure). The processing module is configured to: determine, based on the capacitance signal output by the touch module, an instruction of the user, namely, an instruction corresponding to the touch operation, and send the instruction to the corresponding execution module. The execution module executes an operation corresponding to the instruction.

The electronic device 100 shown in FIG. 1 is merely an example, and does not constitute a limitation on the solutions in embodiments of this application.

FIG. 2 is a diagram of a structure of a touch module. The touch module 200 shown in FIG. 2 may be used in a touch apparatus, for example, a touchpad, a touch display apparatus, or a touch button. For example, the touch module 200 shown in FIG. 2 may be used as the touch module 120 in FIG. 1.

With reference to FIG. 2, the following describes a structure of a touch module provided in embodiments of this application.

As shown in FIG. 2, the touch module 200 includes a pressure sensing layer 210 and a touch capacitive layer 220. The pressure sensing layer 210 and the touch capacitive layer 220 are disposed opposite to each other. The touch capacitive layer 220 is configured to output a capacitance signal. The pressure sensing layer 210 is configured to change under an action of touch pressure. A signal value of the capacitance signal is related to a variation of the pressure sensing layer.

The capacitance signal may be used to determine a touch location of a touch operation. For ease of description, in embodiments of this application, unless otherwise specified, other capacitance signals are capacitance signals corresponding to the touch capacitive layer.

**In** this way, the signal value of the capacitance signal may be used to sense the touch operation, and the signal value of the capacitance signal may be used to reflect the touch pressure.

The touch location is a region in which a user contacts a touch region when the user performs a touch operation in the touch region of the touch module 200. For ease of description, at the pressure sensing layer 210, the touch location may be understood as a location at which the touch pressure is applied. At the touch capacitive layer, the touch location may be understood as a location at which a capacitance value changes due to the touch operation.

The capacitance signal output by the touch capacitive layer 220 includes a capacitance signal corresponding to the touch operation, that is, a sensing signal caused by the touch operation. The capacitance signal corresponding to the touch operation may be used to determine the touch location of the touch operation. The capacitance signal corresponding to the touch operation may be understood as a capacitance signal at the touch location. When the pressure sensing layer 210 changes, the signal value of the capacitance signal is related to the variation of the pressure sensing layer, that is, the signal value of the capacitance signal at the touch location is related to the variation of the pressure sensing layer. The variation of the pressure sensing layer 210 may be understood as a variation of the touch location at the pressure sensing layer 210.

When the user does not perform a touch operation, a capacitance value at the touch capacitive layer 220 may be considered as a baseline value. For example, the baseline value may be 0. When the user performs a touch operation, contact with the touch module 200 causes a change of a capacitance value at a touch location at the touch capacitive layer 220. If the touch operation causes a change of the pressure sensing layer 210, compared with that in a case in which the touch operation is not performed, a change of the capacitance value at the touch location is related to the variation of the pressure sensing layer 210. That is, the capacitance value at the touch location is related to the variation of the pressure sensing layer 210.

For example, the capacitance signal output by the touch module 200 may be a capacitance value.

Alternatively, the capacitance signal output by the touch module 200 may be a variation of the capacitance value, that is, a variation between the capacitance value in a case in which the touch operation is performed and the capacitance value in a case in which the touch operation is not performed.

In this embodiment of this application, an example in which the capacitance signal output by the touch module 200 is the capacitance value is mainly used for description, and this does not constitute a limitation on the solutions in embodiments of this application.

The user may perform the touch operation in a plurality of manners. For example, the user may perform the touch operation by using a finger. For another example, the user may perform the touch operation by using another accessory (for example, a stylus). For ease of description, in this embodiment of this application, only the finger is used as an example for description, and this does not constitute a limitation on the solutions in embodiments of this application.

For example, the touch capacitive layer 220 may be considered as a capacitive sensor array.

When the user performs the touch operation, the capacitance value at the touch location changes compared with the baseline value, and the location at which the capacitance value changes may be determined by scanning a capacitance value of the capacitive sensor array, that is, the touch location is determined. For example, the baseline value is 0. When the user performs the touch operation, the capacitance value at the touch location increases, and the location at which the capacitance value is greater than 0 may be determined by scanning the capacitance value of the capacitive sensor array, that is, the touch location is determined.

For example, the touch capacitive layer 220 may be a self-capacitance capacitive layer, or may be a mutual-capacitance capacitive layer.

For example, the touch capacitive layer 220 may include a two-dimensional touch electrode array, and a plurality of touch electrodes in the two-dimensional touch electrode array are self-capacitance touch electrodes.

For another example, the touch capacitive layer 220 may include a two-dimensional touch electrode array, and a plurality of touch electrodes in the two-dimensional touch electrode array are mutual-capacitance touch electrodes.

It should be understood that the foregoing is merely an example, and the touch capacitive layer 220 may alternatively be a capacitive sensor of another structure.

**In** the solution in this embodiment of this application, the pressure sensing layer may change under the action of the touch pressure. As a result, the signal value of the capacitance signal output by the touch capacitive layer is affected. The signal value of the capacitance signal may be used to indicate a magnitude of the touch pressure, so that the touch pressure can be detected, and an operation related to the touch pressure can be implemented. This helps improve user experience. For example, the touch pressure of the touch operation is determined, and an instruction of the user is implemented based on the touch pressure, to avoid a problem like an accidental touch. The capacitance signal output by the touch capacitive layer may be used to implement touch sensing determine the touch location, and detect the touch pressure. To be specific, touch sensing and touch pressure detection can be implemented based on a single type of capacitance signal, and no additional pressure sensing component or device like another pressure sensor needs to be introduced. This reduces costs. **In** addition, in some implementations, the pressure sensing layer and the touch capacitive layer do not need to be connected through a circuit. This reduces complexity of a structure of the touch module. **In** addition, the touch pressure is determined based on the signal value of the capacitance signal. This can reduce algorithm complexity and helps implement fast detection.

**In** addition, if the touch capacitive layer can determine a multi-touch location, for example, the touch capacitive layer is a mutual inductance capacitive layer, the solution in this embodiment of this application can implement multi-point pressure detection. This helps further improve user experience. For example, when a plurality of fingers of the user perform a touch operation, touch pressure at a touch location corresponding to each finger may be separately detected.

It should be noted that the structure of the touch module 200 shown in FIG. 2 is merely an example, and does not constitute a limitation on the solutions in embodiments of this application. For example, as shown in FIG. 2, the touch capacitive layer 220 may be in direct contact with the pressure sensing layer 210. Alternatively, the touch capacitive layer 220 may be in indirect contact with the pressure sensing layer 210.

Optionally, the pressure sensing layer 210 may include at least one of the following: a first pressure sensing layer 211 or a second pressure sensing layer 212.

The first pressure sensing layer 211 is configured to change a thickness under the action of the touch pressure. The first pressure sensing layer 211 may be an elastic layer, and is compressed and deformed under the action of the touch pressure.

The first pressure sensing layer 211 is configured to reduce a thickness at the touch location under the action of the touch pressure.

For example, the first pressure sensing layer 211 may be an elastic film layer. In this embodiment of this application, the elastic film layer may also be referred to as an elastic thin film.

For example, a material of the elastic thin film may be a polymer.

For example, the material of the elastic thin film may be any one of the following: PDMS, PU, or the like.

Optionally, a Young's modulus of the first pressure sensing layer 211 is less than or equal to 100 Mpa.

The second pressure sensing layer 212 is configured to change a resistance value under the action of the touch pressure.

In a possible implementation (Manner #1), the pressure sensing layer 210 is closer to the touch operation than the touch capacitive layer 220. The following describes an example of a structure of the touch module in Manner #1.

FIG. 3 is a diagram of another touch module 200 according to an embodiment of this application.

Optionally, the touch module 200 may further include a first substrate 230, and the first substrate 230 is located between a touch capacitive layer 220 and a pressure sensing layer 210.

For example, a material of the first substrate 230 may be glass. For example, when there is a light transmission requirement for the touch module 200, for example, when the touch module 200 is used in a touchscreen, the material of the first substrate 230 may be the glass.

Alternatively, a material of the first substrate 230 may be a double-sided tape. For example, when there is no light transmission requirement for the touch module 200, for example, when the touch module 200 is used in a touchpad, the material of the first substrate 230 may be the double-sided tape.

It should be understood that the foregoing are merely examples, and the first substrate 230 may alternatively be made of another material.

For example, as shown in FIG. 3, one side of the first substrate 230 may be in contact with the touch capacitive layer 220, and the other side of the first substrate 230 may be in contact with the pressure sensing layer 210.

It should be understood that the structure of the touch module 200 shown in FIG. 3 is merely an example. In another possible implementation, the first substrate 230 may not be in contact with the touch capacitive layer 220. In another possible implementation, the first substrate 230 may not be in contact with the pressure sensing layer 210.

FIG. 4 is a diagram of still another touch module 200 according to an embodiment of this application.

Optionally, the touch module 200 may further include a second substrate 240, and the second substrate 240 is located on a side that is of a pressure sensing layer 210 and that is away from a touch capacitive layer 220.

A side that is of the second substrate 240 and that is away from the pressure sensing layer 210 is configured to be in contact with a touch operation.

In other words, the side that is of the second substrate 240 and that is away from the pressure sensing layer 210 is configured to be in contact with an external environment. For example, when a user performs a touch operation, a finger may be in direct contact with the second substrate 240.

As shown in FIG. 4, a side that is of the second substrate 240 and that is away from the external environment may be in contact with the pressure sensing layer 210.

As shown in FIG. 4, the second substrate 240, the pressure sensing layer 210, a first substrate 230, and the touch capacitive layer 220 may be disposed in a stacked manner.

It should be understood that a structure shown in FIG. 4 is merely an example. For example, in another possible implementation, the side that is of the second substrate 240 and that is away from the external environment may not be in contact with the pressure sensing layer 210.

For example, the second substrate 240 may be a non-conductive film layer.

For example, the second substrate 240 may be a soft film substrate. The soft film substrate may also be referred to as a flexible substrate.

For example, a material of the second substrate 240 may be any one of the following: polyimide, PE, PET, TPU, PVC, OCA, or the like.

The material of the second substrate 240 may be set as required. For example, when there is a light transmission requirement for the touch module 200, for example, when the touch module 200 is used in a touchscreen, the material of the second substrate 240 may be a transparent material.

In this embodiment of this application, the second substrate may protect the pressure sensing layer, for example, waterproof and dustproof. In addition, disposing the second substrate helps improve user experience. For example, the second substrate is made of a non-conductive material. In this way, discomfort caused by a current that may occur when the user performs the touch operation can be avoided. For another example, limited by various factors like a function of the pressure sensing layer, a surface of the pressure sensing layer may be a non-smooth surface. In this case, the side that is of the second substrate and that is in contact with the external environment may be disposed as a smooth surface. This can improve operation experience of the user.

For example, the solution of Manner #1 is applicable to a touch apparatus like a touchscreen or a touchpad.

The following describes the touch module 200 in Manner #1 with reference to Example 1 to Example 3. It should be noted that the description in Manner #1 is applicable to Example 1 to Example 3. To avoid repetition, some descriptions are properly omitted when Example 1 to Example 3 are described.

### Example 1

In a possible implementation, the pressure sensing layer 210 is a first pressure sensing layer 211. The first pressure sensing layer 211 is closer to the touch operation than the touch capacitive layer 220.

In other words, the first pressure sensing layer 211 is located above the touch capacitive layer 220.

In this embodiment of this application, "above" may be understood as a direction closer to the touch operation. For example, A is located above B. When a finger performs a touch operation, a distance between A and the finger is less than a distance between B and the finger.

The first pressure sensing layer 211 may convert touch pressure into a change of a distance between the finger and the touch capacitive layer.

When a conductor is close to a capacitive sensor, original electric field distribution is changed, which is equivalent to that has a capacitor in parallel. A shorter distance between the conductor and the capacitive sensor indicates greater impact on electric field line distribution in the capacitive sensor, that is, a larger capacitance value of connected in parallel. A capacitance value of the capacitive sensor is inversely proportional to a distance between the conductor and the capacitive sensor.

Therefore, in the solution in this embodiment of this application, a shorter distance between the finger and the touch capacitive layer indicates a larger capacitance value at the touch location, and a longer distance between the finger and the touch capacitive layer indicates a smaller capacitance value at the touch location. Under the action of the touch pressure, a thickness at the touch location at the first pressure sensing layer 211 is smaller than that in a case in which the touch operation is not performed. When different touch pressure is applied, variations of the thickness at the touch location at the first pressure sensing layer 211 are different, and correspondingly, distances between the finger and the touch capacitive layer are also different. Larger touch pressure indicates a larger variation of the thickness at the touch location at the first pressure sensing layer 211, a smaller distance between the finger and the touch capacitive layer, and a larger capacitance value at the touch location. Therefore, a signal value of a capacitance signal may be used to indicate a magnitude of the touch pressure.

When different regions at the first pressure sensing layer 211 are under pressure, the regions under pressure are all deformed, so that signal values of capacitance signals in the different regions change correspondingly, to implement multi-point pressure detection. For example, the touch capacitive layer 220 may be a mutual inductance capacitive layer.

Optionally, the touch module 200 may further include a first substrate 230, and the first substrate 230 is located between the touch capacitive layer 220 and the pressure sensing layer 210, for example, as shown in FIG. 3.

Optionally, the touch module 200 may further include a second substrate 240, and the second substrate 240 is located on the side that is of the pressure sensing layer 210 and that is away from the touch capacitive layer 220, for example, as shown in FIG. 4.

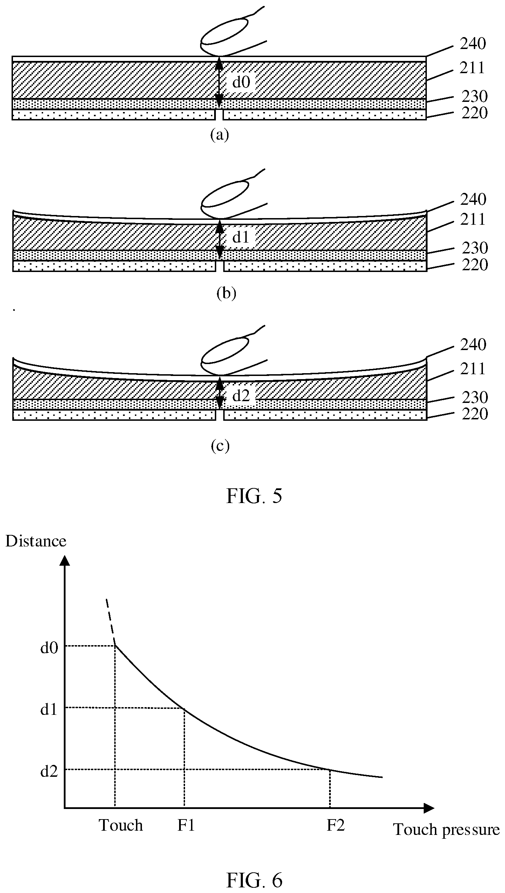

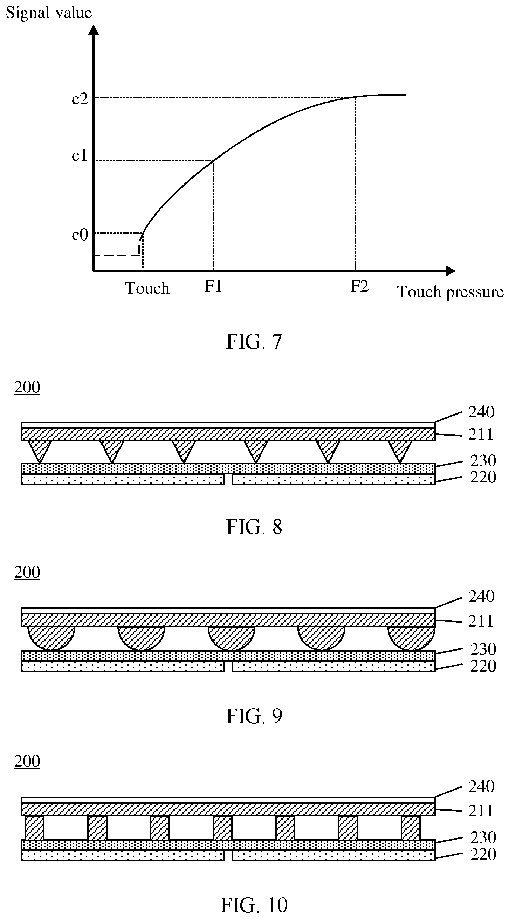

FIG. 5 is a diagram of different touch pressure. FIG. 6 is a diagram of distances between a finger and a touch capacitive layer under different touch pressure. FIG. 7 is a diagram of sensing signals under different touch pressure.

The following describes, with reference to FIG. 5 to FIG. 7, impact of touch operations under different touch pressure on a capacitance value.

A pressure sensing layer 210 in FIG. 5 is a first pressure sensing layer 211. If a finger is just in contact with the touch module 200, that is, the finger does not apply touch pressure to the first pressure sensing layer 211, as shown in (a) in FIG. 5, a thickness of the first pressure sensing layer 211 is a thickness in a case in which no deformation occurs, that is, an initial thickness. In this case, a variation of the thickness is 0, a distance between the finger and a touch capacitive layer 220 is d0, and a capacitance value at a touch location is c0. If the finger applies touch pressure F1 to the first pressure sensing layer 211, where F1>0, under an action of the touch pressure F1, a thickness at a touch location decreases compared with the initial thickness. In this case, a distance between the finger and the touch capacitive layer 220 is d1, as shown in (b) in FIG. 5, and a capacitance value at the touch location is c1. d1 is obtained by subtracting, from the initial thickness d0, a thickness reduced under the action of F1, and d1<d0. Correspondingly, c1>c0. If the finger applies touch pressure F2 to the first pressure sensing layer 211, where F2>0, under an action of the touch pressure F2, a thickness at a touch location decreases compared with the initial thickness. In this case, as shown in (c) in FIG. 5, a distance between the finger and the touch capacitive layer 220 is d2, and a capacitance value at the touch location is c2. d2 is obtained by subtracting, from the initial thickness d0, a thickness reduced under the action of F2, and d2<d0. Correspondingly, c2>c0. F2>F1. **In** this case, the thickness reduced under the action of F2 is larger than the thickness reduced under the action of F1, and d2<d1. Correspondingly, F2 causes a larger change in the capacitance value, and c2>c1.

It should be understood that a relationship between the touch pressure and the distance shown in FIG. 6 is merely an example, and no limitation is constituted on the relationship between the touch pressure and the distance. A relationship between the touch pressure and the signal value shown in FIG. 7 is merely an example, and no limitation is constituted on the relationship between the touch pressure and the signal value.

It should be noted that, in some possible scenarios, a case in which a touch operation applies touch pressure to the pressure sensing layer 210 but the touch pressure is insufficient to make the pressure sensing layer 210 change may also be considered as that the touch operation does not apply the touch pressure to the pressure sensing layer 210. This is not distinguished in this embodiment of this application.

Optionally, a side that is of the first pressure sensing layer 211 and that is away from the touch operation includes a plurality of protrusion structures protruding toward a direction opposite to the first pressure sensing layer 211.

**In** Example 1, the side that is of the first pressure sensing layer 211 and that is away from the touch operation may also be understood as a side that is of the first pressure sensing layer 211 and that is close to the touch capacitive layer 220. The direction facing an opposite side of the first pressure sensing layer 211 may also be understood as a direction facing the touch capacitive layer 220. In other words, the side that is of the first pressure sensing layer 211 and that is close to the touch capacitive layer 220 includes the plurality of protrusion structures protruding toward the touch capacitive layer 220.

For example, a size of the protrusion structure may be at a micron level.

For example, the plurality of protrusion structures may be arranged in an array.

For example, the protrusion structure may be a pyramid structure, a hemispherical structure, a columnar structure, a cuboid structure, or the like.

FIG. 8 to FIG. 10 are respectively diagrams of three types of touch modules according to embodiments of this application. A protrusion structure in FIG. 8 is a pyramid structure. A protrusion structure in FIG. 9 is a hemispherical structure. A protrusion structure in FIG. 10 is a columnar structure.

Optionally, a bottom area of a side that is of the protrusion structure and that is away from the first pressure sensing layer 211 is less than a bottom area of a side that is of the protrusion structure and that is close to the first pressure sensing layer 211.

In Example 1, the side that is of the protrusion structure and that is away from the first pressure sensing layer 211 may also be understood as a side that is of the protrusion structure and that is close to the touch capacitive layer 220. The side that is of the protrusion structure and that is close to the first pressure sensing layer 211 may also be understood as a side that is of the protrusion structure and that is away from the touch capacitive layer 220. In other words, the bottom area of the side that is of the protrusion structure and that is close to the touch capacitive layer 220 is less than the bottom area of the side that is of the protrusion structure and that is away from the touch capacitive layer 220.

In other words, the protrusion structure may be a structure whose bottom area is greater than a top area, and the top of the protrusion structure faces the touch capacitive layer 220.

For example, the protrusion structure may be a pyramid structure, a hemispherical structure, or the like.

As shown in FIG. 8, the protrusion structure may be the pyramid structure, and the top of the pyramid structure faces the touch capacitive layer 220.

In this embodiment of this application, when the bottom area of the side that is of the protrusion structure at the first pressure sensing layer 211 and that faces the touch capacitive layer is small, in comparison with a case in which the protrusion structure at the first pressure sensing layer 211 has another configuration, when same touch pressure is applied, a contact area of the top is smaller. For example, a contact area between the top and the first substrate is smaller, and internal stress in the region is larger, so that the structure can generate larger compression and deformation. In other words, when the finger applies the same touch pressure, a thickness change of the pressure sensing layer having the foregoing protrusion structure is more obvious, and a distance between the finger and the touch capacitive layer is shorter, so that a variation of the capacitance value is larger. In this way, sensitivity of the touch module for touch pressure sensing under the same pressure can be increased.

For example, the plurality of protrusion structures may be adjacently arranged.

Optionally, the plurality of protrusion structures are spaced from each other. In other words, in the plurality of protrusion structures, there is a specific spacing between every two protrusion structures.

In comparison with a case in which the plurality of protrusion structures are adjacently arranged, when the plurality of protrusion structures are spaced from each other, the contact area of the top of the protrusion structure per unit area is smaller. In addition, a larger spacing between the protrusion structures indicates a smaller quantity of protrusion structures per unit area and a smaller contact area of the top of the protrusion structure per unit area. When same touch pressure is applied, larger compression and deformation can be generated. In other words, when the finger applies the same touch pressure, a thickness change of the pressure sensing layer having the protrusion structures spaced from each other is more obvious, and a distance between the finger and the touch capacitive layer is shorter, so that a variation of the capacitance value is larger. In this way, sensitivity of the touch module for pressure sensing under the same pressure can be increased. A degree to which the capacitance value changes with a magnitude of the touch pressure may be adjusted by adjusting the spacing between the protrusion structures, that is, sensitivity of the touch module for pressure sensing may be adjusted.

Optionally, the plurality of protrusion structures may be a same protrusion structure.

When the same protrusion structure is used, light transmission of the pressure sensing layer is better. This helps apply the touch module to a scenario in which light transmission is required, for example, a touchscreen.

Optionally, the first pressure sensing layer 211 includes a plurality of hollow structures.

The hollow structure may also be referred to as a cavity. In other words, there are a plurality of cavities inside the first pressure sensing layer 211.

For example, a size of the hollow structure may be at a micron level.

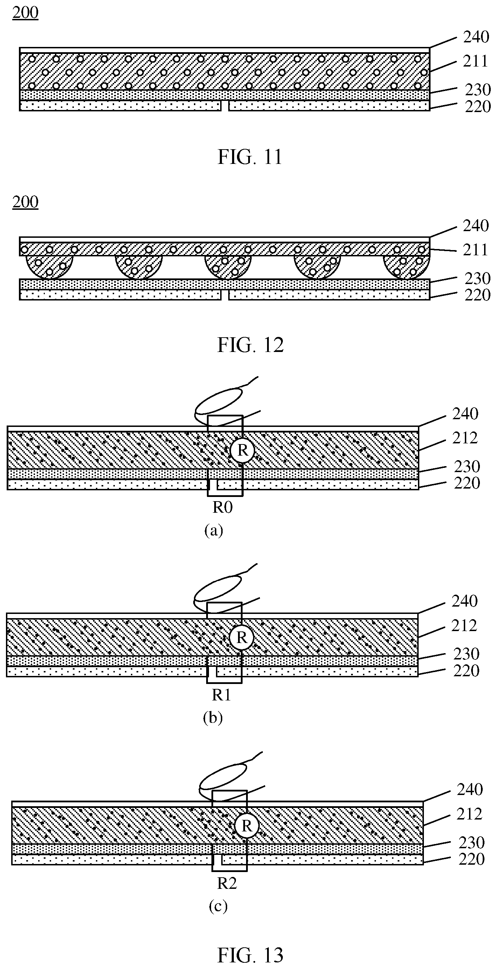

FIG. 11 is a diagram of a still further touch module according to an embodiment of this application. As shown in FIG. 11, there is a hollow structure inside a first pressure sensing layer 211.

The hollow structure inside the first pressure sensing layer 211 may improve compressibility of the first pressure sensing layer 211. Compared with a first pressure sensing layer 211 having no hollow structure inside, the first pressure sensing layer 211 having the hollow structure inside can generate larger compression and deformation when same touch pressure is applied. In other words, when a finger applies same touch pressure, a thickness change of the first pressure sensing layer 211 having the hollow structure inside is more obvious, and a distance between the finger and a touch capacitive layer is shorter, so that a variation of a capacitance value is larger. In this way, sensitivity of the touch module for pressure sensing under the same pressure can be increased.

The plurality of hollow structures are spaced from each other.

A larger size of the hollow structure per unit volume indicates a smaller spacing between the hollow structures and stronger compressibility of the first pressure sensing layer 211. In other words, when the finger applies same touch pressure, a larger size of the hollow structure indicates a smaller spacing between the hollow structures, a more obvious thickness change of the first pressure sensing layer 211, and a shorter distance between the finger and the touch capacitive layer, so that the variation of the capacitance value is larger. In this way, sensitivity of the touch module for pressure sensing under the same pressure can be increased.

For example, a side that is of the first pressure sensing layer 211 and that is close to the touch capacitive layer 220 includes a plurality of protrusion structures protruding toward the touch capacitive layer 220, and the first pressure sensing layer 211 may include the plurality of hollow structures.

**In** other words, there may be both the protrusion structure and the hollow structure at the first pressure sensing layer 211.

FIG. 12 is a diagram of a yet further touch module according to an embodiment of this application. As shown in FIG. 12, there is a hollow structure inside a first pressure sensing layer 211. A surface of the first pressure sensing layer 211 has a plurality of protrusion structures.

It should be understood that the structure shown in FIG. 12 is merely an example, and constitutes no limitation on the solution in this embodiment of this application. For specific descriptions of the protrusion structure and the hollow structure, refer to the foregoing descriptions. To avoid repetition, details are not described herein again.

### Example 2

**In** a possible implementation, a pressure sensing layer 210 is a second pressure sensing layer 212. The second pressure sensing layer 212 is closer to a touch operation than a touch capacitive layer 220.

**In** other words, the second pressure sensing layer 212 is located above the touch capacitive layer 220.

The second pressure sensing layer 212 may be a variable resistor layer, and a resistance value of the variable resistor layer changes with a change of touch pressure.

Conductivity of an object near a capacitive sensor affects the capacitive sensor. Greater conductivity of the object indicates greater impact of the object on electric field line distribution in the capacitive sensor. An insulator has small impact on electric field line distribution in the capacitive sensor, and the conductor has large impact on electric field line distribution in the capacitive sensor. A signal value of the capacitive sensor is directly proportional to the conductivity of the object. **In** other words, a capacitance value of the capacitive sensor is inversely proportional to a resistance value of the object. **In** this embodiment of this application, when a resistance value of the second pressure sensing layer 212 changes with the touch pressure, a capacitance value of the touch capacitive layer also changes accordingly.

For example, a resistance value at a touch location at the second pressure sensing layer 212 may decrease as the touch pressure increases. **In** this case, the second pressure sensing layer 212 is configured to decrease the resistance value under the action of the touch pressure.

Optionally, a material of the second pressure sensing layer 212 may be a composite material having conductive particles, and a concentration of the conductive particles is greater than a permeation threshold.

For example, in the composite material, a size of the conductive particle may be a nanometer-level size.

The conductive particle may be a conductive particle, a conductive nanowire, or the like.

For example, the conductive particle may be a carbon nanoparticle, a carbon nanotube, graphene, a silver nanowire, or the like.

For example, the second pressure sensing layer 212 may be a film layer made of the composite material. In this embodiment of this application, the film layer using the composite material may also be referred to as a doped thin film.

A material of the doped thin film may be a polymer, and the inside of the doped film layer is doped with conductive particles of nanometer size.

When the concentration of the conductive substance is greater than the permeation threshold, a resistor may be formed between two sides of the second pressure sensing layer 212, and has an initial resistance value. When the conductive particles at the second pressure sensing layer 212 are under pressure, a spacing between the conductive particles decreases, a probability of tunneling between the conductive particles is higher, an equivalent resistance value of the second pressure sensing layer 212 decreases, and equivalent capacitance between the conductive particles increases as the spacing decreases. Therefore, larger pressure applied to the second pressure sensing layer 212 indicates larger conductivity and larger equivalent capacitance.

When different touch pressure is applied, variations of resistance values of the second pressure sensing layer 212 are also different, and correspondingly, variations of capacitance values of the touch capacitive layer are also different. For example, the resistance value at the touch location at the second pressure sensing layer 212 may decrease as the touch pressure increases. The doped thin film may be transitioned from an insulator to a conductor. In this case, larger touch pressure indicates a smaller resistance value at the touch location at the second pressure sensing layer 212 and a larger capacitance value at the touch location. Therefore, a signal value of a capacitance signal may be used to indicate a magnitude of the touch pressure.

When different regions at the second pressure sensing layer 212 are under pressure, resistance values of the regions under pressure change, so that signal values of capacitance signals in the different regions change correspondingly, to implement multi-point pressure detection. For example, the touch capacitive layer 220 may be a mutual inductance capacitive layer.

Optionally, the touch module 200 may further include a first substrate 230, and the first substrate 230 is located between the touch capacitive layer 220 and the pressure sensing layer 210, for example, as shown in FIG. 3.

Optionally, the touch module 200 may further include a second substrate 240, and the second substrate 240 is located on a side that is of the pressure sensing layer 210 and that is away from the touch capacitive layer 220, for example, as shown in FIG. 4.

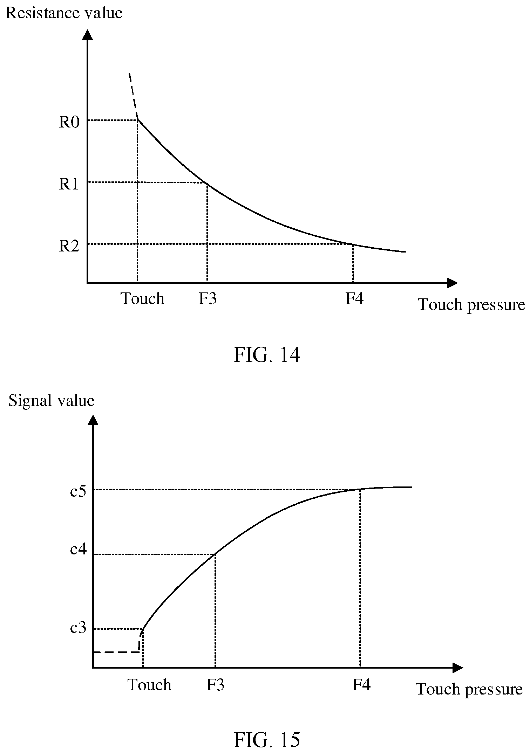

FIG. 13 is a diagram of different touch pressure. FIG. 14 is a diagram of resistance values at touch locations under different touch pressure. FIG. 15 is a diagram of capacitance values under different touch pressure.

The following describes, with reference to FIG. 13 to FIG. 15, impact of touch operations under different touch pressure on the capacitance value.

A pressure sensing layer 210 in FIG. 13 is a second pressure sensing layer 212. If a finger does not apply touch pressure to the second pressure sensing layer 212, or the finger is just in contact with a touch module 200, a resistance value of the second pressure sensing layer 212 may be considered as an initial resistance value of the second pressure sensing layer 212 when no force is applied, as shown in (a) in FIG. 13. In this case, a resistance value at a touch location at the second pressure sensing layer 212 is R0, and a capacitance value at the touch location at the touch capacitive layer 220 is c3.

If the finger applies touch pressure F3 to the second pressure sensing layer 212, where F3>0, as shown in (b) in FIG. 13, in this case, a resistance value at a touch location at the second pressure sensing layer 212 is R1, and a capacitance value at the touch location at the touch capacitive layer 220 is c4. Under an action of the touch pressure F3, the resistance value at the touch location at the second pressure sensing layer 212 is less than the initial resistance value, that is, R1<R0. Correspondingly, a change of the capacitance value at the touch location at the touch capacitive layer 220 is larger than that in a case in which the touch operation is not performed, that is, c4>c3.

If the finger applies touch pressure F4 to the second pressure sensing layer 212, where F4>0, as shown in (c) in FIG. 13, in this case, a resistance value at a touch location at the second pressure sensing layer 212 is R2, and a capacitance value at the touch location at the touch capacitive layer 220 is c5. F4>F3. In this case, a decrease in the resistance value generated under an action of F4 is greater than that of F3, and R2<R1. Correspondingly, a change in the capacitance value caused by F4 is greater, and c5>c4.

### Example 3

In a possible implementation, the touch module 200 includes a first substrate 230. The first substrate 230 is located between the touch capacitive layer 220 and the pressure sensing layer 210. The pressure sensing layer 210 is closer to the touch operation than the touch capacitive layer 220.

In other words, the touch module 200 includes the pressure sensing layer 210, the first substrate 230, and the touch capacitive layer 220 from top to bottom.

Optionally, the pressure sensing layer 210 includes a first pressure sensing layer 211 and a first conducting layer 213. The first conducting layer 213 is located on a side that is of the first pressure sensing layer 211 and that is close to the first substrate 230. Alternatively, the pressure sensing layer 210 includes a second pressure sensing layer 212 and a first conducting layer 213. The first conducting layer 213 is located on a side that is of the second pressure sensing layer 212 and that is close to the first substrate 230.

Optionally, the touch module 200 may further include a second substrate 240.

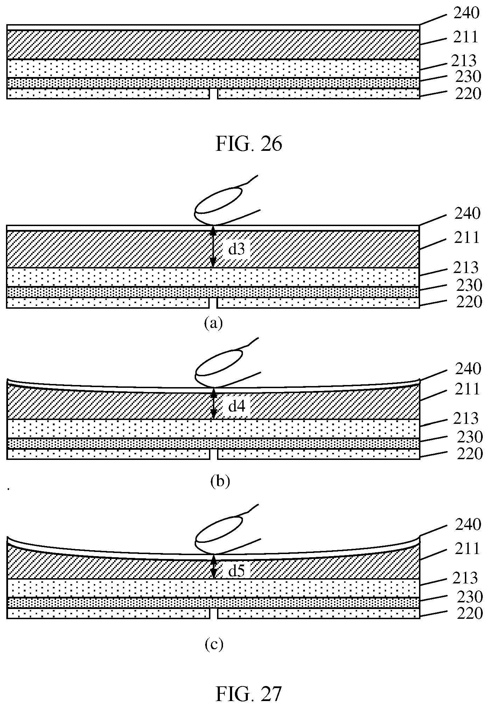

FIG. 26 is a diagram of a still yet further touch module 200 according to an embodiment of this application. As shown in FIG. 26, the touch module 200 may include a second substrate 240, a first pressure sensing layer 211, a first conducting layer 213, a first substrate 230, and a touch capacitive layer 220.

In Example 3, an example in which a pressure sensing layer 210 includes the first pressure sensing layer 211 and the first conducting layer 213 is mainly used for description, and does not constitute a limitation on the solution in this embodiment of this application.

The first pressure sensing layer 211 may convert touch pressure into a change of a distance between a finger and the first conducting layer 213.

For example, the first pressure sensing layer 211 may be an elastic thin film, and the first conducting layer 213 may be a conductive thin film. The first pressure sensing layer 211 and the first conducting layer 213 are superimposed to obtain a composite layer thin film. The composite layer thin film may be used as the pressure sensing layer 210.

The first conducting layer 213 is located between the first pressure sensing layer 211 and the touch capacitive layer 220. Specific electric field distribution is formed between the first conducting layer 213 and the touch capacitive layer 220. When a conductor is close to the first conducting layer 213, original electric field distribution of the first conducting layer 213 is changed, electric field distribution of the touch capacitive layer 220 is changed, and a capacitance value of the touch capacitive layer 220 is changed. A shorter distance between the conductor and the first conducting layer 213 indicates greater impact on electric field line distribution in the first conducting layer 213. In other words, larger surface capacitance of the first conducting layer 213 indicates greater impact on the touch capacitive layer 220, and therefore the capacitance value of the touch capacitive layer 220 is larger.

Therefore, in the solution in this embodiment of this application, a shorter distance between the finger and the first conducting layer 213 indicates larger surface capacitance of the first conducting layer 213 at a touch location, and therefore the capacitance value of the touch capacitive layer 220 at the touch location is larger. A longer distance between the finger and the first conducting layer 213 indicates smaller surface capacitance of the first conducting layer 213 at the touch location, and therefore the capacitance value of the touch capacitive layer 220 at the touch location is smaller. Under an action of the touch pressure, a thickness at the touch location at the first pressure sensing layer 211 is smaller than that in a case in which the touch operation is not performed. When different touch pressure is applied, variations of the thickness at the touch location at the first pressure sensing layer 211 are different, and correspondingly, distances between the finger and the first conducting layer 213 are also different. Larger touch pressure indicates a larger variation of the thickness at the touch location at the first pressure sensing layer 211, a smaller distance between the finger and the first conducting layer 213, larger surface capacitance at the touch location at the first conducting layer 213, and a larger capacitance value at the touch location at the touch capacitive layer 220. Therefore, a change of a signal value of a capacitance signal of the touch capacitive layer 220 may indicate a magnitude of the touch pressure.

When different regions at the first pressure sensing layer 211 are under pressure, the regions under pressure are all deformed, so that signal values of capacitance signals in the different regions change correspondingly, to implement multi-point pressure detection. For example, the touch capacitive layer 220 may be a mutual inductance capacitive layer.

Further, a material of the first conducting layer 213 may be a transparent conducting material. In this way, the conducting layer has light transmission.

For example, the material of the first conducting layer 213 may be a silver nanowire, indium tin oxide (indium tin oxide, ITO), or poly 3,4-ethylenedioxythiophene: poly styrene sulfonate (poly 3,4-ethylenedioxythiophene: poly styrene sulfonate, PEDOT: PSS).

Further, a surface of the first pressure sensing layer 211 is flat and has no structural feature.

In Example 1, a protrusion structure, for example, a structure shown in each of FIG. 8 to FIG. 10, may be disposed on the surface of the first pressure sensing layer 211. A hollow structure may be disposed inside the first pressure sensing layer 211. The foregoing structures can improve sensitivity of the touch module for pressure sensing. The foregoing structures may change refraction of light and affect light transmission. In Example 3, the conducting layer is introduced. Under same touch pressure, after the conducting layer is introduced, a variation of the capacitance value of the touch capacitive layer is larger, and sensitivity of the touch module for pressure sensing under same pressure is increased. In the solution in Example 3, the first pressure sensing layer 211 may be a thin film with a flat surface and without any structural feature, and the first conducting layer 213 may be made of a transparent conducting material. This improves light transmission of the pressure sensing layer, and helps apply the touch module to a scenario in which light transmission is required, for example, a touchscreen. In addition, the first conducting layer 213 is introduced to ensure sensitivity of the touch module for pressure sensing. This helps improve touch sensing performance.

It should be understood that the foregoing is merely an example. In another scenario, for example, in a scenario in which a light transmission requirement is not high, a protrusion structure may alternatively be disposed on the surface of the first pressure sensing layer 211. Alternatively, a hollow structure may be disposed inside the first pressure sensing layer 211. For specific descriptions, refer to Example 1. Details are not described herein again.

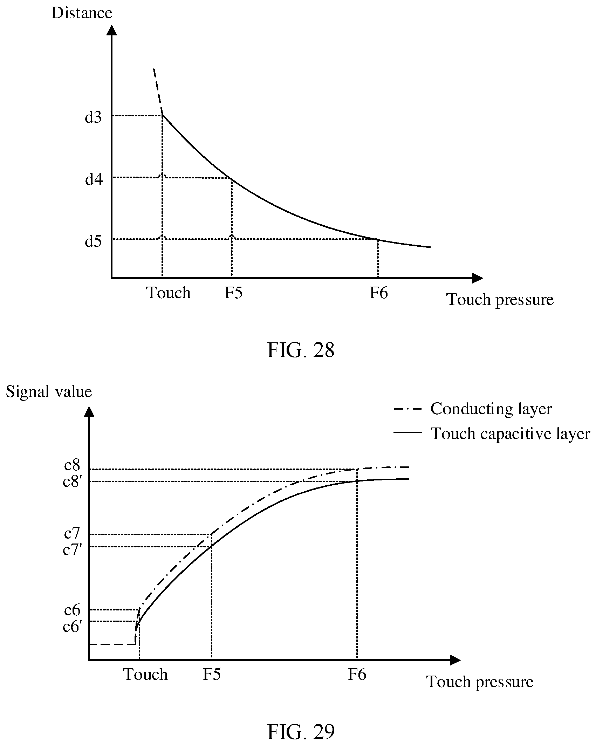

FIG. 27 is a diagram of different touch pressure. FIG. 28 is a diagram of distances between a finger and a first conducting layer 213 under different touch pressure. FIG. 29 is a diagram of sensing signals under different touch pressure.

The following describes, with reference to FIG. 27 to FIG. 29, impact of touch operations under different touch pressure on the capacitance value.

If a finger is just in contact with a touch module 200, that is, the finger does not apply touch pressure to a first pressure sensing layer 211, as shown in (a) in FIG. 27, a thickness of the first pressure sensing layer 211 is a thickness in a case in which no deformation occurs, that is, an initial thickness. In this case, a variation of the thickness is 0, a distance between the finger and the first conducting layer 213 is d3, a capacitance value of a surface of the first conducting layer 213 at a touch location is c6, and a capacitance value of the touch capacitive layer 220 at the touch location is c6'. If the finger applies touch pressure F5 to the first pressure sensing layer 211, where F5>0, under an action of the touch pressure F5, a thickness at the touch location decreases compared with the initial thickness. In this case, a distance between the finger and the first conducting layer 213 is d4, as shown in (b) in FIG. 27, a capacitance value of the surface of the first conducting layer 213 at the touch location is c7, and a capacitance value of the touch capacitive layer 220 at the touch location is c7'. d4 is obtained by subtracting, from the initial thickness d3, a thickness reduced under the action of F5, and d4<d3. Correspondingly, c7>c6. In this case, the touch capacitive layer 220 is more affected by the conducting layer, that is, c7'>c6'. If the finger applies touch pressure F6 to the first pressure sensing layer 211, where F6>0, under an action of the touch pressure F6, a thickness at the touch location decreases compared with the initial thickness. In this case, as shown in (c) in FIG. 27, a distance between the finger and the first conducting layer 213 is d5, a capacitance value of the surface of the first conducting layer 213 at the touch location is c8, and a capacitance value of the touch capacitive layer 220 at the touch location is c8'. d5 is obtained by subtracting, from the initial thickness d3, a thickness reduced under the action of F6, and d5<d3. Correspondingly, c8>c6. F6>F5. In this case, the thickness reduced under the action of F6 is larger than the thickness reduced under the action of F5, and d5<d4. Correspondingly, F6 causes a larger variation of the capacitance value on the surface of the first conducting layer 213, and c8>c7. In this case, the touch capacitive layer 220 is more affected by the conducting layer, that is, c8'>c7'.

It should be understood that a relationship between the touch pressure and the distance shown in FIG. 28 is merely an example, and no limitation is constituted on the relationship between the touch pressure and the distance. A relationship between the touch pressure and the signal value shown in FIG. 29 is merely an example, and no limitation is constituted on the relationship between the touch pressure and the signal value.

It should be understood that the foregoing uses only an example in which a pressure sensing layer includes the first pressure sensing layer 211 and the first conducting layer 213. **In** another scenario, for example, a scenario in which a light transmission requirement is not high, the pressure sensing layer may alternatively include a second pressure sensing layer 212 and the first conducting layer 213. For specific descriptions of the second pressure sensing layer 212, refer to Example 2. To avoid repetition, details are not described herein again.

It should be understood that, in some possible scenarios, Example 1 to Example 3 may be used in combination. For example, the pressure sensing layer 210 may include the first pressure sensing layer 211 and the second pressure sensing layer 212. The first pressure sensing layer 211 and the second pressure sensing layer 212 are disposed opposite to each other. The first pressure sensing layer 211 may be located above the second pressure sensing layer 212. Alternatively, the second pressure sensing layer 212 may be located above the first pressure sensing layer 211. For another example, the pressure sensing layer 210 may include the second pressure sensing layer 212, the first pressure sensing layer 211, and the first conducting layer. The three layers are disposed relative to each other. A composite thin film in Example 3 may be located above the second pressure sensing layer 212.

**In** another possible implementation (Manner #2), the pressure sensing layer 210 is further away from the touch operation than the touch capacitive layer 220. **In** other words, the touch capacitive layer 220 is closer to the touch operation.

In Manner #2, the pressure sensing layer 210 includes the first pressure sensing layer 211 and/or the second pressure sensing layer 212. The pressure sensing layer 210 further includes a second conducting layer 214. The second conducting layer 214 is located on a side that is of the pressure sensing layer and that is away from the touch capacitive layer 220.

For example, if the pressure sensing layer 210 includes the first pressure sensing layer 211 and the second conducting layer 214, the second conducting layer 214 is located on a side that is of the first pressure sensing layer 211 and that is away from the touch capacitive layer 220. For another example, if the pressure sensing layer 210 includes the second pressure sensing layer 212 and the second conducting layer 214, the second conducting layer 214 is located on a side that is of the second pressure sensing layer 212 and that is away from the touch capacitive layer 220.

The second conducting layer 214 may be a grounded conducting layer.

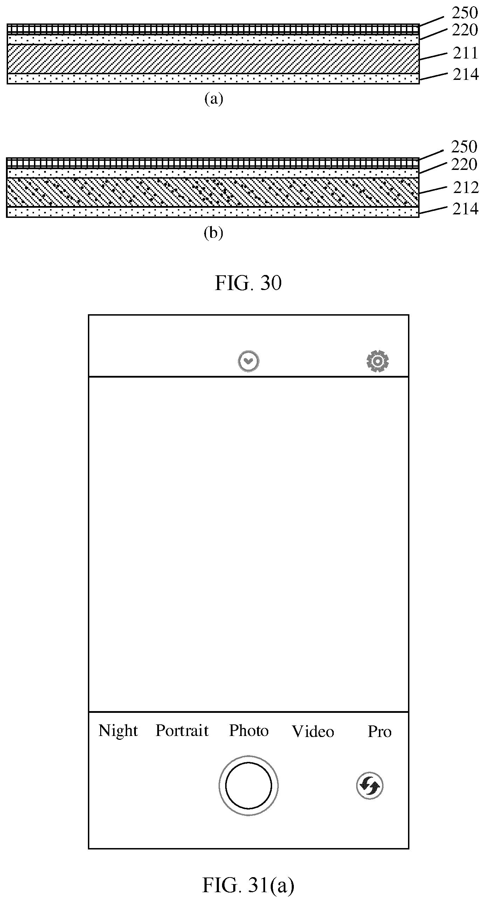

FIG. 30 is a diagram of even yet another touch module 200 according to an embodiment of this application.

Optionally, the touch module 200 may further include a third substrate 250. The third substrate 250 is located on a side that is of a touch capacitive layer 220 and that is away from a pressure sensing layer 210. A side that is of the third substrate 250 and that is away from the touch capacitive layer 220 is configured to be in contact with a touch operation.

As shown in (a) in FIG. 30, the touch module 200 includes the third substrate 250, the touch capacitive layer 220, a first pressure sensing layer 211, and a second conducting layer 214 from top to bottom.

As shown in (b) in FIG. 30, the touch module 200 includes the third substrate 250, the touch capacitive layer 220, a second pressure sensing layer 212, and the second conducting layer 214 from top to bottom.

The third substrate 250 may be an insulation material.

For example, the solution of Manner #2 is applicable to a capacitive button. For example, the capacitive button may be a capacitive button on a surface of a true wireless stereo (true wireless stereo, TWS) headset or a capacitive button on a surface of smart glasses. In this case, the third substrate 250 may alternatively be an insulation side wall that is of the capacitive button and that is in contact with an external environment. The touch capacitive layer 220 is a conducting layer in the side wall. The first pressure sensing layer 211 or the second pressure sensing layer 212 is a thin film layer attached to a surface of the conducting layer.

For example, the touch capacitive layer 220 may be a self-inductive capacitive layer.

For example, the first pressure sensing layer 211 or the second pressure sensing layer 212 may be a thin film layer, and a first conducting layer 213 may be a conductive thin film. The first pressure sensing layer 211/the second pressure sensing layer 212 and first conducting layer 213 are superimposed to obtain a double-electrode layer thin film. The double-electrode layer thin film may be used as the pressure sensing layer 210.

The following describes the touch module 200 in Manner #2 with reference to Example 4 and Example 5. It should be noted that the description in Manner #2 is applicable to Example 4 and Example 5. To avoid repetition, some descriptions are properly omitted when Example 4 and Example 5 are described.

### Example 4

In a possible implementation, the pressure sensing layer 210 includes the first pressure sensing layer 211 and the second conducting layer 214. The pressure sensing layer 210 is further away from the touch operation than the touch capacitive layer 220. The second conducting layer 214 is located on a side that is of the first pressure sensing layer 211 and that is away from the touch capacitive layer 220, for example, as shown in (a) in FIG. 30.

The first pressure sensing layer 211 is located between the touch capacitive layer 220 and the second conducting layer 214, and may convert touch pressure into a change of a distance between the touch capacitive layer 220 and the second conducting layer 214.

In the solution of this embodiment of this application, a shorter distance between the touch capacitive layer 220 and the second conducting layer 214 indicates a larger capacitance value at a touch location at the touch capacitive layer 220, and a longer distance between the touch capacitive layer 220 and the second conducting layer 214 indicates a smaller capacitance value at the touch location at the touch capacitive layer 220. Under an action of the touch pressure, a thickness at the touch location at the first pressure sensing layer 211 is smaller than that in a case in which the touch operation is not performed. When different touch pressure is applied, variations of the thicknesses at the touch location at the first pressure sensing layer 211 are different, and correspondingly, distances between the touch capacitive layer 220 and the second conducting layer 214 are also different. Larger touch pressure indicates a larger variation of the thickness at the touch location at the first pressure sensing layer 211, a smaller distance between the touch capacitive layer 220 and the second conducting layer 214, and a larger capacitance value at the touch location. Therefore, a signal value of a capacitance signal may be used to indicate a magnitude of the touch pressure.

For example, if a finger is just in contact with the touch module 200, that is, the finger does not apply touch pressure to the first pressure sensing layer 211, a thickness of the first pressure sensing layer 211 is a thickness in a case in which no deformation occurs, that is, an initial thickness. In this case, a variation of the thickness is 0, a distance between the touch capacitive layer 220 and the second conducting layer 214 is d0, and a capacitance value at the touch location is c0. The capacitance value c0 is a sum of a capacitance increase caused when the finger touches a surface of the touch capacitive layer 220 of the touch module 200 and a capacitance between the touch capacitive layer 220 and the second conducting layer 214.

If the finger applies touch pressure F1 to the first pressure sensing layer 211, where F1>0, under an action of the touch pressure F1, a thickness at the touch location decreases compared with the initial thickness. In this case, a distance between the touch capacitive layer 220 and the second conducting layer 214 is d1, and a capacitance value at the touch location is c1. d1 is obtained by subtracting, from the initial thickness d0, a thickness reduced under the action of F1, and d1<d0. Because d1<d0, the distance between the touch capacitive layer 220 and the second conducting layer 214 is shorter, and a change of the capacitance signal is larger. Correspondingly, c1>c0. If the finger applies touch pressure F2 to the first pressure sensing layer 211, where F2>0, under an action of the touch pressure F2, a thickness at the touch location decreases compared with the initial thickness. In this case, a distance between the touch capacitive layer 220 and the second conducting layer 214 is d2, and a capacitance value at the touch location is c2. d2 is obtained by subtracting, from the initial thickness d0, a thickness reduced under the action of F2, and d2<d0. Correspondingly, c2>c0. F2>F1. In this case, the thickness reduced under the action of F2 is larger than the thickness reduced under the action of F1, and d2<d1. Because d2<d1, the distance between the touch capacitive layer 220 and the second conducting layer 214 is shorter. Correspondingly, F2 causes a larger change in the capacitance value, and c2>c1.

Therefore, a magnitude of the touch pressure applied to the surface of the insulation side wall may be determined by reading a capacitance signal value of the touch capacitive layer 220.

For a regular change between the capacitance value of the touch capacitive layer and the touch pressure, refer to related descriptions in FIG. 5 to FIG. 7 in Example 1. "A distance between the finger and the touch capacitive layer 220" is replaced with "a distance between the touch capacitive layer 220 and the second conducting layer 214". It should be understood that the foregoing is merely an example description of a relationship between the capacitance value of the touch capacitive layer and the touch pressure, and does not limit the relationship between the two in Example 4 to be completely the same as the relationship between the two in Example 1.

Optionally, a side that is of the first pressure sensing layer 211 and that is away from the touch operation includes a plurality of protrusion structures protruding toward a direction opposite to the first pressure sensing layer 211.

In Example 4, the side that is of the first pressure sensing layer 211 and that is away from the touch operation may also be understood as a side that is of the first pressure sensing layer 211 and that is close to the second conducting layer 214. The direction facing an opposite side of the first pressure sensing layer 211 may also be understood as the direction facing the second conducting layer 214. In other words, the side that is of the first pressure sensing layer 211 and that is close to the second conducting layer 214 includes the plurality of protrusion structures protruding toward the second conducting layer 214.

For example, a size of the protrusion structure may be at a micron level.

For example, the plurality of protrusion structures may be arranged in an array.

For example, the protrusion structure may be a pyramid structure, a hemispherical structure, a columnar structure, a cuboid structure, or the like.

Optionally, a bottom area of a side that is of the protrusion structure and that is away from the first pressure sensing layer 211 is less than a bottom area of a side that is of the protrusion structure and that is close to the first pressure sensing layer 211.

In Example 1, the side that is of the protrusion structure and that is away from the first pressure sensing layer 211 may also be understood as the side facing the second conducting layer 214. The side that is of the protrusion structure and that is close to the first pressure sensing layer 211 may also be understood as a side that is away from the second conducting layer 214. In other words, the bottom area of the side that is of the protrusion structure and that is close to the second conducting layer 214 is less than the bottom area of the side that is of the protrusion structure and that is away from the second conducting layer 214.

In other words, the protrusion structure may be a structure whose bottom area is greater than a top area, and the top of the protrusion structure faces the second conducting layer 214.

For example, the protrusion structure may be a pyramid structure, a hemispherical structure, or the like.

In this embodiment of this application, when the bottom area of the side that is of the protrusion structure at the first pressure sensing layer 211 and that is close to the second conducting layer is small, in comparison with a case in which the protrusion structure at the first pressure sensing layer 211 has another configuration, when same touch pressure is applied, a contact area between the top and the second conducting layer is smaller, and internal stress in the region is larger, so that the structure can generate larger compression and deformation. In other words, when the finger applies the same touch pressure, a thickness change of the pressure sensing layer having the foregoing protrusion structure is more obvious, and the distance between the touch capacitive layer and the second conducting layer is shorter, so that a variation of the capacitance value is larger. In this way, sensitivity of the touch module for touch pressure sensing under the same pressure can be increased.

For example, the plurality of protrusion structures may be adjacently arranged.

Optionally, the plurality of protrusion structures are spaced from each other. In other words, in the plurality of protrusion structures, there is a specific spacing between every two protrusion structures.

In comparison with a case in which the plurality of protrusion structures are adjacently arranged, when the plurality of protrusion structures are spaced from each other, a contact area of the top of the protrusion structure per unit area is smaller. In addition, a larger spacing between the protrusion structures indicates a smaller quantity of protrusion structures per unit area and a smaller contact area of the top of the protrusion structure per unit area. When same touch pressure is applied, larger compression and deformation can be generated. In other words, when the finger applies the same touch pressure, a thickness change of the pressure sensing layer having the protrusion structures spaced from each other is more obvious, and a distance between the touch capacitive layer and the second conducting layer is shorter, so that a variation of the capacitance value is larger. In this way, sensitivity of the touch module for pressure sensing under the same pressure can be increased. A degree to which the capacitance value changes with a magnitude of the touch pressure may be adjusted by adjusting the spacing between the protrusion structures, that is, sensitivity of the touch module for pressure sensing may be adjusted.

Optionally, the plurality of protrusion structures may be a same protrusion structure.

When the same protrusion structure is used, light transmission of the pressure sensing layer is better. This helps apply the touch module to a scenario in which light transmission is required.

Optionally, the first pressure sensing layer 211 includes a plurality of hollow structures.

For example, a size of the hollow structure may be at a micron level.

The hollow structure inside the first pressure sensing layer 211 may improve compressibility of the first pressure sensing layer 211. Compared with a first pressure sensing layer 211 having no hollow structure inside, the first pressure sensing layer 211 having the hollow structure inside can generate larger compression and deformation when same touch pressure is applied. **In** other words, when the finger applies the same touch pressure, a thickness change of the first pressure sensing layer 211 having the hollow structure inside is more obvious, and a distance between the touch capacitive layer and the second conducting layer is shorter, so that a variation of a capacitance value is larger. **In** this way, sensitivity of the touch module for pressure sensing under the same pressure can be increased.

The plurality of hollow structures are spaced from each other.

A larger size of the hollow structure per unit volume indicates a smaller spacing between the hollow structures and stronger compressibility of the first pressure sensing layer 211. **In** other words, when the finger applies same touch pressure, a larger size of the hollow structure indicates a smaller spacing between the hollow structures, a more obvious thickness change of the first pressure sensing layer 211, and a shorter distance between the touch capacitive layer and the second conducting layer, so that a variation of the capacitance value is larger. **In** this way, sensitivity of the touch module for pressure sensing under the same pressure can be increased.

For example, the side that is of the first pressure sensing layer 211 and that is close to the second conducting layer 214 includes the plurality of protrusion structures protruding toward the second conducting layer 214, and the first pressure sensing layer 211 may include the plurality of hollow structures.

In other words, there may be both the protrusion structure and the hollow structure at the first pressure sensing layer 211.

### Example 5

In a possible implementation, the pressure sensing layer 210 includes the second pressure sensing layer 212 and the second conducting layer 214. The pressure sensing layer 210 is further away from the touch operation than the touch capacitive layer 220. The second conducting layer 214 is located on a side that is of the second pressure sensing layer 212 and that is away from the touch capacitive layer 220, for example, as shown in (b) in FIG. 30.

The second pressure sensing layer 212 may be a variable resistor layer, and a resistance value of the variable resistor layer changes with a change of the touch pressure. The second pressure sensing layer 212 is located between the touch capacitive layer 220 and the second conducting layer 214, and may convert the touch pressure into a change of a resistance value between the touch capacitive layer 220 and the second conducting layer 214. Correspondingly, the capacitance value of the touch capacitive layer also changes accordingly.

For example, a resistance value at the touch location at the second pressure sensing layer 212 may decrease as the touch pressure increases. In this case, the second pressure sensing layer 212 is configured to decrease the resistance value under the action of the touch pressure.

Optionally, a material of the second pressure sensing layer 212 may be a composite material having conductive particles, and a concentration of the conductive particles is greater than a permeation threshold.

For example, in the composite material, a size of the conductive particle may be a nanometer-level size.

The conductive particle may be a conductive particle, a conductive nanowire, or the like.

For example, the conductive particle may be a carbon nanoparticle, a carbon nanotube, graphene, a silver nanowire, or the like.

For example, the second pressure sensing layer 212 may be a film layer made of the composite material, that is, a doped film.

A material of the doped thin film may be a polymer, and the inside of the doped film layer is doped with conductive particles of nanometer size.

When the concentration of the conductive substance is greater than the permeation threshold, a variable resistor may be formed between two sides of the second pressure sensing layer 212, and has an initial resistance value. When the conductive particles at the second pressure sensing layer 212 are under pressure, a spacing between the conductive particles decreases, a probability of tunneling between the conductive particles is higher, an equivalent resistance value of the second pressure sensing layer 212 decreases, and equivalent capacitance between the conductive particles increases as the spacing decreases. Therefore, larger pressure applied to the second pressure sensing layer 212 indicates larger conductivity and larger equivalent capacitance.

When different touch pressure is applied, variations of resistance values of the second pressure sensing layer 212 are also different, and correspondingly, variations of capacitance values of the touch capacitive layer are also different. For example, the resistance value at the touch location at the second pressure sensing layer 212 may decrease as the touch pressure increases, that is, the conductivity of the second pressure sensing layer 212 increases as the touch pressure increases. The doped thin film may be transitioned from an insulator to a conductor. **In** this case, larger touch pressure indicates a smaller resistance value at the touch location at the second pressure sensing layer 212, that is, a smaller resistance value between the second pressure sensing layer 212 and the second conducting layer at the touch location, and a larger capacitance value at the touch location. Therefore, the signal value of the capacitance signal may be used to reflect the magnitude of the touch pressure.

For example, if the finger does not apply touch pressure to the second pressure sensing layer 212, or the finger is just in contact with the touch module 200, a resistance value of the second pressure sensing layer 212 may be considered as an initial resistance value of the second pressure sensing layer 212 when no force is applied. In this case, a resistance value at the touch location at the second pressure sensing layer 212 is R0, and a capacitance value at the touch location at the touch capacitive layer 220 is c3.

If the finger applies touch pressure F3 to the second pressure sensing layer 212, where F3>0, a resistance value at the touch location at the second pressure sensing layer 212 is R1, and a capacitance value at the touch location at the touch capacitive layer 220 is c4. Under an action of the touch pressure F3, the resistance value at the touch location at the second pressure sensing layer is less than the initial resistance value, that is, R1<R0, and conductivity of the second pressure sensing layer 212 increases. Correspondingly, a change of the capacitance value at the touch location at the touch capacitive layer 220 is larger than that in a case in which the touch operation is not performed, that is, c4>c3.

If the finger applies touch pressure F4 to the second pressure sensing layer 212, where F4>0, a resistance value at the touch location at the second pressure sensing layer 212 is R2, and a capacitance value at the touch location at the touch capacitive layer 220 is c5. F4>F3. In this case, a decrease in the resistance value generated under an action of F4 is larger than that of F3, R2<R1, and conductivity of the second pressure sensing layer 212 is further improved. Correspondingly, F4 causes a larger change in the capacitance value, and c5>c4.

Therefore, the magnitude of the touch pressure applied to the surface of the insulation side wall may be determined by reading the capacitance signal value of the touch capacitive layer 220.

For a regular change between the capacitance value of the touch capacitive layer and the touch pressure, refer to related descriptions in FIG. 13 to FIG. 15 in Example 2. "A distance between the finger and the touch capacitive layer 220" is replaced with "a distance between the touch capacitive layer 220 and the second conducting layer 214". It should be understood that the foregoing is merely an example description of the relationship between the capacitance value of the touch capacitive layer and the touch pressure, and does not limit the relationship between the two in Example 5 to be completely the same as the relationship between the two in Example 2.

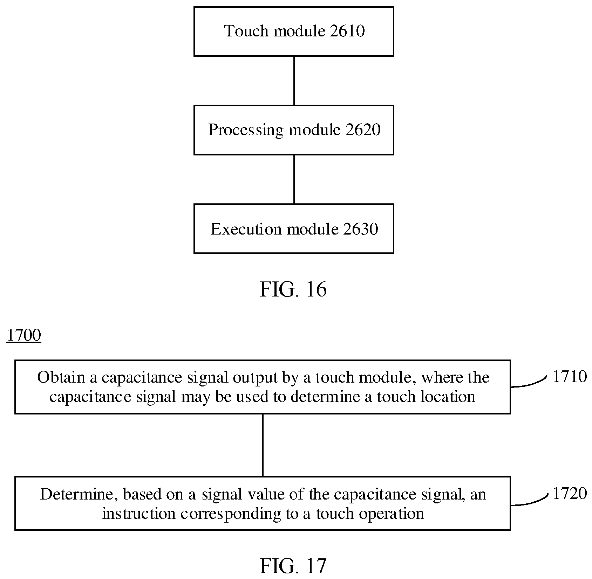

FIG. 16 is a block diagram of an electronic device according to an embodiment of this application. As shown in FIG. 16, the electronic device may include a touch module 2610, a processing module 2620, and an execution module 2630. The touch module 2610 is configured to output a capacitance signal. The processing module 2620 is configured to: determine, based on the capacitance signal output by the touch module 2610, an instruction corresponding to a touch operation, and send the instruction to the execution module 2630 for execution. The capacitance signal output by the touch module 2610 may be the capacitance signal at the touch capacitive layer described above.

FIG. 17 is a schematic flowchart of a touch detection method according to an embodiment of this application. For example, the touch module in the method 1700 shown in FIG. 17 may be the touch module 200 in embodiments of this application. Alternatively, the touch module in the method 1700 may be a touch module used in cooperation with a touch accessory in embodiments of this application.

For example, the method shown in FIG. 17 may be performed by the electronic device shown in FIG. 16.

As shown in FIG. 17, the method 1700 may include the following steps.

1710: Obtain a capacitance signal output by the touch module, where the capacitance signal may be used to determine a touch location of a touch operation. A signal value of the capacitance signal is related to touch pressure of the touch operation.

For example, step 1710 may be performed by the processing module 2620 in FIG. 16. The touch module may be the touch module 2610 in FIG. 16.

In the method 1700, the capacitance signal may be a capacitance signal output by a touch capacitive layer.

1720: Send, based on the signal value of the capacitance signal, an instruction corresponding to the touch operation.

The instruction corresponding to the touch operation is related to the touch pressure of the touch operation. The instruction corresponding to the touch operation may be sent to a corresponding execution module for execution.

For example, step 1720 may be performed by the processing unit 2620 in FIG. 16. The processing unit 2620 may send the instruction to the execution module 2630 for execution.

In this embodiment of this application, the signal value of the capacitance signal is related to the touch pressure of the touch operation, and the signal value of the capacitance signal may be used to reflect the touch pressure of the touch operation. The instruction related to the touch pressure may be determined based on the signal value of the capacitance signal, and different instructions may be executed based on different touch pressure applied by a user. This improves user experience. In addition, the capacitance signal may be further used to determine the touch location. In this embodiment of this application, a single type of capacitance signal may be used to reflect the touch pressure and determine the touch location. This reduces a calculation amount and improves processing efficiency.

Optionally, step 1720 includes: sending, based on the signal value of the capacitance signal and a correspondence between a plurality of ranges of a signal value of a preset capacitance signal and preset instructions, an instruction corresponding to the touch operation.

For example, the correspondence between the plurality of ranges and the preset instructions may be understood in the following manner.

For example, each of the plurality of ranges corresponds to one or more instructions. **In** this case, if the signal value of the capacitance signal does not fall within any one of the plurality of ranges, it may be determined that the signal value of the capacitance signal does not correspond to any instruction.

For another example, a union set of the plurality of ranges may be a set of all possible values of the signal value of the capacitance signal. Preset instructions corresponding to a part of ranges may be empty, in other words, the part of ranges may not correspond to any instruction. **In** this case, if the signal value of the capacitance signal falls within the part of ranges, it may be determined that the signal value of the capacitance signal does not correspond to any instruction.

For example, the touch module may output one or more capacitance signals.

For example, the touch capacitive layer in the touch module may be a capacitive sensor array, and the capacitance signals output by the touch module include all capacitance signals in the array.

Optionally, the capacitance signal includes a first capacitance signal. When a signal value of the first capacitance signal falls within a first range, the instruction corresponding to the touch operation is a first instruction corresponding to the first range. Alternatively, when the signal value of the first capacitance signal falls within a second range, the instruction corresponding to the touch operation is a second instruction corresponding to the second range.

The first range and the second range belong to the plurality of ranges, and the first range is different from the second range. The first instruction and the second instruction belong to the preset instructions, and the first instruction is different from the second instruction.

For example, the first capacitance signal may be any capacitance signal in the capacitance signals output by the touch module.

For example, the plurality of ranges may be determined based on a plurality of trigger thresholds. A range within which the signal value of the capacitance signal falls may be determined by comparing the signal value of the capacitance signal with values of the plurality of trigger thresholds, and a corresponding instruction is sent.

For example, the first range and the second range may be determined based on a first threshold and a second threshold. The first threshold is less than the second threshold. The first range is an interval greater than the first threshold and less than or equal to the second threshold, and the second range is an interval greater than the second threshold. A magnitude of the touch pressure may be determined by comparing the signal value of the capacitance signal with the preset first threshold and the preset second threshold. For example, the touch pressure is positively correlated with the signal value of the capacitance signal. When the touch pressure is large, the second instruction is sent; or when the touch pressure is small, the first instruction is sent.

For example, the first threshold may be a baseline value. When the signal value of the first capacitance signal is greater than the baseline value, it may be determined that the touch operation is performed, and the location of the touch operation may be determined based on the first capacitance signal. **In** this way, the touch operation can be sensed based on the signal value of the capacitance signal, and the location of the touch operation can be determined. **In** addition, the signal value of the capacitance signal is related to the touch pressure. **In** this way, touch sensing and pressure detection can be implemented based on the signal value of the capacitance signal.

The foregoing uses only one capacitance signal as an example for description, and does not constitute a limitation on the solution in this embodiment of this application. For example, the capacitance signal may include the first capacitance signal and a second capacitance signal. When the signal value of the first capacitance signal falls within the first range, the instruction corresponding to the touch operation is the first instruction corresponding to the first range. Alternatively, when the signal value of the first capacitance signal falls within the second range, the instruction corresponding to the touch operation is the second instruction corresponding to the second range.

For example, the instruction may be an operation instruction, for example, an input instruction.

Alternatively, the instruction may instruct a pressure level of the touch pressure.

In this case, the correspondence between the plurality of ranges of the signal value of the preset capacitance signal and the preset instructions may also be understood as a correspondence between the plurality of ranges of the signal value of the preset capacitance signal and the preset pressure levels.

Alternatively, the instruction may instruct a pressure value of the touch pressure. For example, step 1720 may include: determining the pressure value of the touch pressure based on the signal value of the capacitance signal and a correspondence between the signal value of the preset capacitance signal and the preset pressure value.

It should be understood that the foregoing is merely an example, and a specific type of the instruction is not limited in this embodiment of this application.

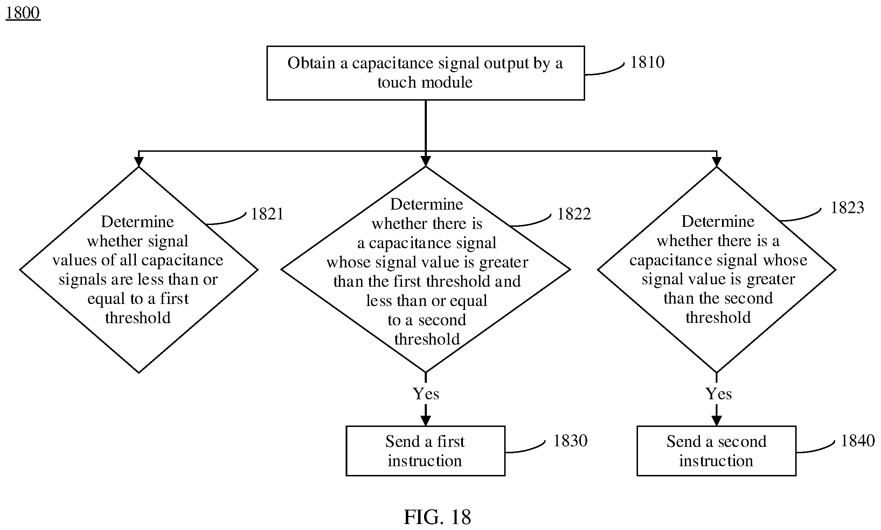

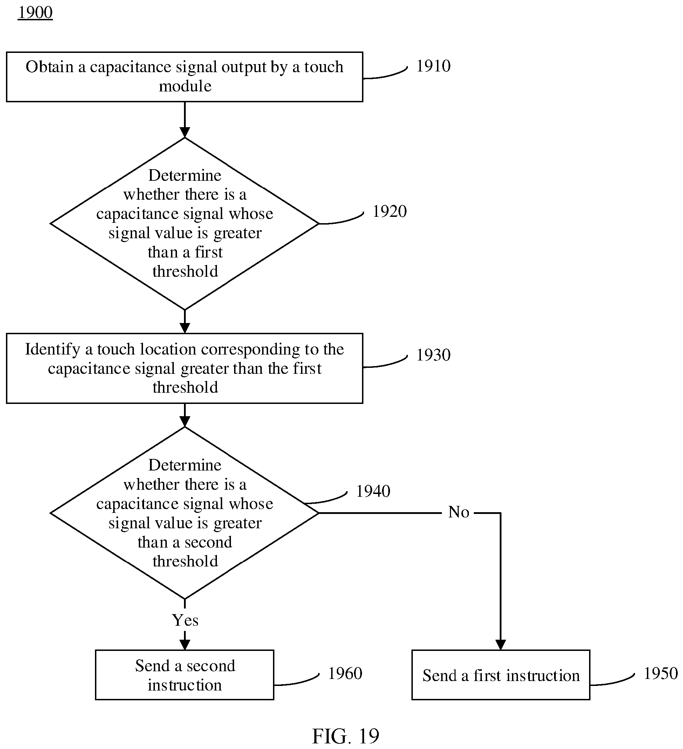

The following describes a specific implementation of the method 1700 with reference to methods shown in FIG. 18 and FIG. 19. For ease of description, the following uses an example in which the touch pressure is positively correlated with the signal value of the capacitance signal for description. In this case, touch pressure at a touch location corresponding to a capacitance signal whose signal value falls within the first range is less than touch pressure at a touch location corresponding to a capacitance signal whose signal value falls within the second range. In FIG. 18 and FIG. 19, only an example in which the touch module outputs capacitance signals of all capacitive sensors is used for description.

FIG. 18 is a schematic flowchart of another touch detection method according to an embodiment of this application. The method shown in FIG. 18 is a specific implementation of the method 1700 shown in FIG. 17. As shown in FIG. 18, the method 1800 may include the following steps.

1810: Obtain a capacitance signal output by a touch module.

The capacitance signal in FIG. 18 and FIG. 19 may be a capacitance signal output by a touch capacitive layer in the touch module.

1820: Determine a relationship (not shown in the figure) between the signal value of the capacitance signal and a first threshold and a second threshold.

In other words, it is determined whether there is a capacitance signal that is in the capacitance signal output by the touch module and whose signal value falls within the first range or the second range.

Specifically, step 1820 may be implemented by step 1821 to step 1823.

1821: Determine whether signal values of all capacitance signals are less than or equal to a first threshold, that is, determine whether the signal values of all the capacitance signals fall within neither the first range nor the second range. If the signal values of all the capacitance signals are less than or equal to the first threshold, it may be determined that a user does not perform a touch operation, or the user does not touch the touch module. In this case, no instruction may be sent.

1822: Determine whether there is a capacitance signal whose signal value is greater than the first threshold and less than or equal to the second threshold, that is, determine whether there is a capacitance signal whose signal value falls within the first range. If there is a capacitance signal whose signal value is greater than the first threshold and less than or equal to the second threshold, step 1830 is performed. In this case, it may be determined that the user performs a touch operation at a location corresponding to the capacitance signal whose signal value falls within the first range, and the user taps the location.

1823: Determine whether there is a capacitance signal whose signal value is greater than the second threshold, that is, determine whether there is a capacitance signal whose signal value falls within the second range. If there is a capacitance signal whose signal value is greater than the second threshold, step 1840 is performed. In this case, it may be determined that the user performs a touch operation at a location corresponding to the capacitance signal whose signal value falls within the second range, and the user applies specific pressure at the location.

1830: Send a first instruction.

The first instruction may correspond to the first range.

In step 1830, the touch location corresponding to the capacitance signal whose signal value falls within the first range may be further identified.

1840: Send a second instruction.

The second instruction may correspond to the second range.

In step 1840, the touch location corresponding to the capacitance signal whose signal value falls within the second range may be further identified.

FIG. 19 is a schematic flowchart of still another touch detection method according to an embodiment of this application. The method shown in FIG. 19 is a specific implementation of the method 1700 shown in FIG. 17. As shown in FIG. 19, the method 1900 may include the following steps.

1910: Obtain at least one capacitance signal output by a touch capacitive layer.

1920: Determine whether there is a capacitance signal whose signal value is greater than a first threshold.

If there is not a capacitance signal whose signal value is greater than the first threshold, in other words, signal values of all capacitance signals are less than or equal to the first threshold, or signal values of all capacitance signals do not fall within a first range or a second range, it may be determined that a user does not perform a touch operation, or a user does not touch a touch module. In this case, no instruction may be sent.

If there is a capacitance signal whose signal value is greater than the first threshold, that is, there is a capacitance signal whose signal value is greater than the first threshold, step 1930 is performed. In this case, it may be determined that the user performs a touch operation at a location (that is, a touch location) corresponding to the capacitance signal whose signal value is greater than the first threshold.

1930: Identify the touch location corresponding to the capacitance signal whose signal value is greater than the first threshold.

1940: Determine whether there is a capacitance signal whose signal value is greater than a second threshold. That is, it is determined whether there is a capacitance signal whose signal value falls within the second range.

If there is a capacitance signal whose signal value is greater than the second threshold, that is, there is a capacitance signal whose signal value falls within the second range, step 1960 is performed. In this case, it may be determined that the user performs a touch operation at a location corresponding to the capacitance signal whose signal value falls within the second range, and the user applies specific pressure at the location. That is, the touch operation is a "press" operation.

If there is not a capacitance signal whose signal value is greater than the second threshold, that is, there is a capacitance signal whose signal value falls within the first range, step 1950 is performed. In this case, it may be determined that the user performs a touch operation at a location corresponding to the capacitance signal whose signal value falls within the first range, and the user taps the location. That is, the touch operation is a "tap" operation.

1950: Send a first instruction.

The first instruction may correspond to the first range.

1960: Send a second instruction.

The second instruction may correspond to the second range.

It should be understood that the methods shown in FIG. 18 and FIG. 19 are merely examples, and constitute no limitation on the solutions in the examples of this application. For example, FIG. 18 and FIG. 19 show only two ranges: the first range and the second range. In another possible implementation, the plurality of ranges in the method 1700 may further include three or more ranges.

For example, the plurality of ranges may include a first range, a second range, and a third range. The first range, the second range, and the third range may be determined based on a first threshold, a second threshold, and a third threshold. The first threshold is less than the second threshold. The second threshold is less than the third threshold. The first range is an interval greater than the first threshold and less than or equal to the second threshold. The second range is an interval greater than the second threshold and less than or equal to the third threshold. The third range is an interval greater than the third threshold.

For example, when a signal value in a signal value of the at least one capacitance signal falls within the first range, a first instruction corresponding to the first range is sent. When a signal value in the signal value of the at least one capacitance signal falls within the second range, a second instruction corresponding to the second range is sent. Alternatively, when a signal value in the signal value of the at least one capacitance signal falls within the third range, a third instruction corresponding to the third range is sent.

In addition, the touch pressure may be further used in combination with a non-pressure indicator to determine a corresponding instruction. In other words, the signal value may be used in combination with another non-stress indicator to determine a corresponding instruction. For example, the non-pressure indicator includes a length of the touch operation, duration of the touch operation, or the like.

The capacitance signal in the method 1700, the method 1800, and the method 1900 may be understood as a capacitance signal output by the touch capacitive layer.

As described above, in the solution in this embodiment of this application, a "tap" operation and a "press" operation performed by the user on the touch module may be identified. The two operations correspond to different instructions.

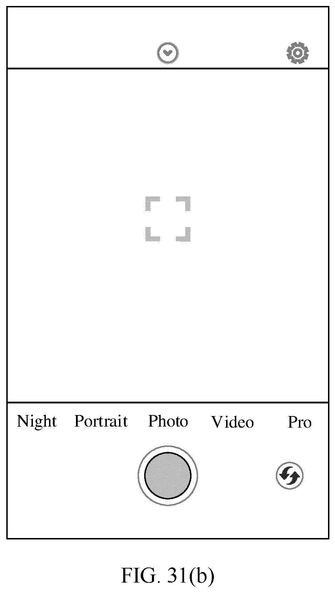

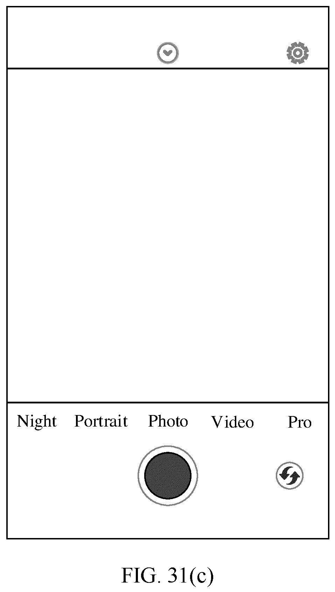

A photographing scenario is used as an example. When performing a "tap" operation and a "press" operation on the screen, the user may separately trigger different instructions. FIG. 31(a), FIG. 31(b), and FIG. 31(c) are a diagram of user interfaces in a photographing scenario.

The user may start a photographing application (application, APP) in a mobile phone, a tablet computer, or a watch, and perform a tap or press operation in a displayed photographing interface. For example, the mobile phone is used as an example. After the photographing APP is opened, a displayed photographing interface may be shown in FIG. 31 (a). In the photographing interface, when it is identified that the user performs a "tap" operation on a screen, a "focus" instruction may be sent to a device system. As shown in FIG. 31 (b), it is identified that the user taps a shutter button, and the "focus" instruction is sent to the device system, to trigger a focus operation. When it is identified that the user performs a "press" operation on the screen, a "shutter" instruction may be sent to the device system. As shown in FIG. 31 (c), it is identified that the user presses the shutter button, and the "shutter" instruction is sent to the device system, to trigger a photographing operation.

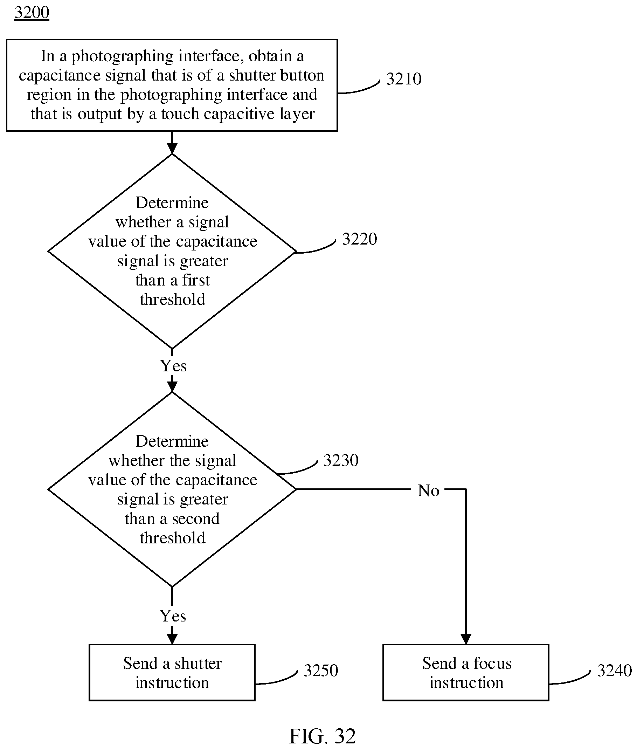

FIG. 32 is a schematic flowchart of a touch detection method according to an embodiment of this application. For example, a touch module in the method 3200 shown in FIG. 32 may be the touch module 200 in embodiments of this application. Alternatively, the touch module in the method 3200 may be a touch module used in cooperation with the touch accessory in embodiments of this application. The method 3200 shown in FIG. 32 may be considered as an example of an application scenario of the method 1900. To avoid repetition, some descriptions are appropriately omitted when the method 1900 is described.

As shown in FIG. 32, the method 3200 may include the following steps.

3210: In a photographing interface, obtain a capacitance signal that is of a shutter button region in the photographing interface and that is output by a touch capacitive layer.

The capacitance signal is sent to a processing module for processing. The capacitance signal may also be referred to as a capacitive sensor signal.

3220: Determine whether a signal value of the capacitance signal is greater than a first threshold.

If the signal value of the capacitance signal is not greater than the first threshold, that is, the signal value of the capacitance signal in the shutter button region is less than or equal to the first threshold, or the signal value of the capacitance signal falls within neither a first range nor a second range, it may be determined that a user does not perform a touch operation, or a user does not touch the shutter button region. In this case, no instruction may be sent.

If the signal value of the capacitance signal is greater than the first threshold, that is, the signal value of the shutter button region is greater than the first threshold, step 3230 is performed. In this case, it may be determined that the user performs a touch operation in the shutter button region.

3230: Determine whether the signal value of the capacitance signal is greater than a second threshold. That is, it is determined whether there is a capacitance signal whose signal value falls within the second range.

If the signal value of the capacitance signal is greater than the second threshold, that is, there is a capacitance signal whose signal value falls within the second range, step 3250 is performed. In this case, it may be determined that the user applies specific pressure on the shutter button region, that is, the user performs a "press" operation on the shutter button region.

If the signal value of the capacitance signal is not greater than the second threshold, that is, there is a capacitance signal whose signal value falls within the first range, step 3240 is performed. In this case, it may be determined that the user taps the shutter button region.

3240: Send a focus instruction.

A first instruction is sent to a device system, where the first instruction is the focus instruction, and a focus function is triggered.

3250: Send a shutter instruction.

A second instruction is sent to the device system, where the second instruction is the shutter instruction, namely, a "photographing" instruction, to trigger a photographing function.

An embodiment of this application further provides a touch accessory. The touch accessory is used in a touch module in an electronic device. The touch accessory may cooperate with the touch module to implement a related function of the electronic device. The touch module is configured to output a capacitance signal. The capacitance signal is used to determine a touch location of a touch operation.

The touch accessory includes a pressure sensing layer and a fourth substrate. The fourth substrate and the pressure sensing layer are disposed opposite to each other. The pressure sensing layer is configured to change under an action of touch pressure, and a signal value of the capacitance signal is related to a variation of the pressure sensing layer.

For specific descriptions of the pressure sensing layer, refer to related descriptions of the pressure sensing layer 210 in Manner #1. To avoid repetition, details are not described herein again.

The touch accessory in this embodiment of this application may cooperate with the touch module to implement a function related to the touch pressure. For example, some APPs in the electronic device or some system functions in the electronic device may need to detect touch pressure. When the touch module of the electronic device does not have a function of detecting touch pressure, the touch accessory provided in this embodiment of this application cooperates with the touch module to implement touch pressure detection. When a user applies different touch pressure, signal values of capacitance signals output by the touch module are different. The APPs or the electronic device may determine the touch pressure based on the signal value of the capacitance signal, to implement a function related to the touch pressure. For a specific touch detection method, refer to related descriptions in FIG. 17 to FIG. 19. To avoid repetition, details are not described herein again.

Optionally, the pressure sensing layer includes at least one of the following: a first pressure sensing layer or a second pressure sensing layer. The first pressure sensing layer is configured to change a thickness under the action of the touch pressure, and the second pressure sensing layer is configured to change a resistance value under the action of the touch pressure.

Optionally, the pressure sensing layer further includes a first conducting layer. The first conducting layer is located on a side that is of the first pressure sensing layer and that is close to the fourth substrate. The first pressure sensing layer is closer to the touch operation than the first conducting layer.

Optionally, a Young's modulus of the first pressure sensing layer is less than or equal to 100 Mpa.

Optionally, a side that is of the first pressure sensing layer and that is close to the touch module includes a plurality of protrusion structures protruding toward the touch module.

Optionally, a bottom area of a side that is of the protrusion structure and that faces the touch module is less than a bottom area of a side that is of the protrusion structure and that is away from the touch module.

Optionally, the plurality of protrusion structures are spaced from each other.

Optionally, the plurality of protrusion structures are a same protrusion structure.

Optionally, the pressure sensing layer includes a plurality of hollow structures.

Optionally, the pressure sensing layer includes the second pressure sensing layer, and the second pressure sensing layer is configured to change the resistance value under the action of the touch pressure.

Optionally, a material of the second pressure sensing layer is a composite material having conductive particles, and a concentration of the conductive particles is greater than a permeation threshold.

Optionally, the touch accessory further includes a fifth substrate, and the fifth substrate is located on a side that is of the pressure sensing layer and that is away from the fourth substrate.

In a possible implementation, the touch accessory in this embodiment of this application may be a touch screen protector, for example, a tempered glass screen protector. The touch screen protector may be attached to a surface of a touch apparatus. A size of the touch screen protector may be the same as or different from a touch region of the touch apparatus.

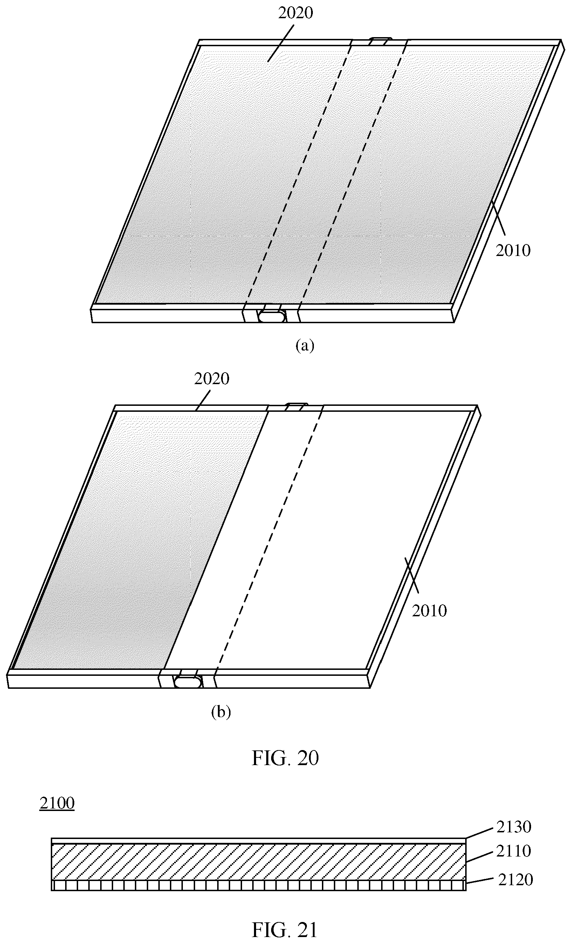

FIG. 20 is a diagram of usage scenarios of touch accessories according to an embodiment of this application. As shown in FIG. 20, an electronic device may be a mobile phone, and a touch apparatus 2010 may be a touchscreen 2010. A touch screen protector 2020 may be attached to a surface of the touchscreen 2010. For example, as shown in (a) in FIG. 20, the touch screen protector 2020 may cover an entire touch region of the touchscreen 2010. In other words, a size of the touch screen protector 2020 may be consistent with a size of the touch region of the touchscreen 2010. For another example, as shown in (b) in FIG. 20, the touch screen protector 2020 may cover a part of the touch region of the touchscreen 2010. In other words, the size of the touch screen protector 2020 may be less than the size of the touch region of the touchscreen 2010.

It should be understood that FIG. 20 is merely an example, and constitutes no limitation on this embodiment of this application. For example, the electronic device in FIG. 20 may alternatively be another electronic device, for example, a notebook computer. For another example, the touch apparatus in FIG. 20 may alternatively be another touch apparatus, for example, a touchpad. In addition, the size of the touch screen protector 2020 and a location at which the touch screen protector 2020 is attached may be set based on an actual requirement. This is not limited in this embodiment of this application.

FIG. 21 is a diagram of a structure of a touch accessory according to an embodiment of this application. The touch accessory 2100 shown in FIG. 21 may be used as the touch screen protector 2020 in FIG. 20.

As shown in FIG. 21, the touch accessory 2100 includes a pressure sensing layer 2110 and a fourth substrate 2120.

A material of the fourth substrate 2120 may be a material of a screen protector, for example, a material of a tempered glass screen protector.

Optionally, the touch accessory 2100 may further include a fifth substrate 2130. The fifth substrate 2130 is located on a side that is of the pressure sensing layer 2110 and that is away from the fourth substrate 2120. For specific descriptions of the fifth substrate 2130, refer to the foregoing related descriptions of the second substrate 240. To avoid repetition, details are not described herein again.

The touch screen protector in this embodiment of this application may cooperate with a touch module to implement a function related to touch pressure. When the touch module of the electronic device does not have a function of detecting touch pressure, the touch screen protector provided in this embodiment of this application may be attached to a surface of the touch module. When a user applies different touch pressure, signal values of capacitance signals output by the touch module are different. An APP or the electronic device may implement a function related to touch pressure by detecting a signal value of a capacitance signal.

The following describes an example of an application scenario of the touch screen protector in this embodiment of this application.

The touch accessory may cooperate with the touch module to implement a function related to pressure sensing in a virtual keyboard application.

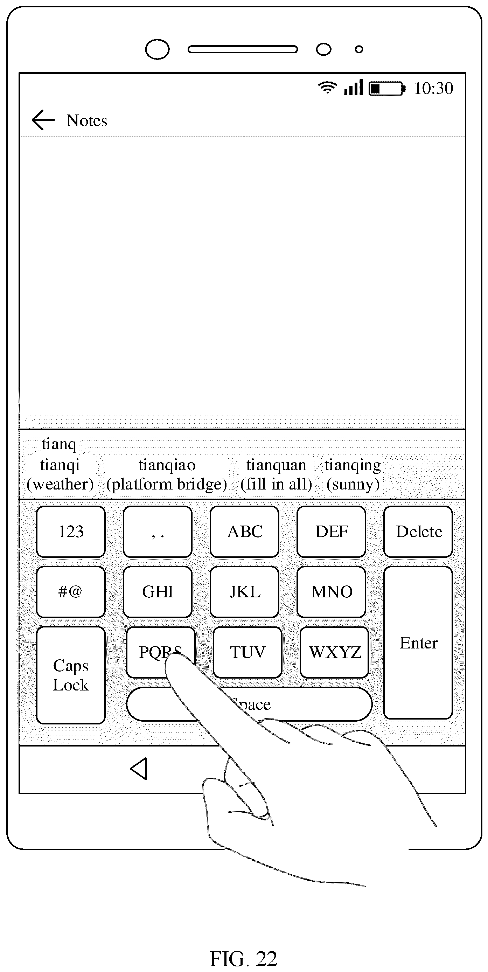

For example, the user may attach the touch accessory to the touch module, and start an application used to implement a virtual keyboard. As shown in FIG. 22, a partial region covered by the touch accessory on the touch module is a region in which the virtual keyboard is located. When the touch accessory is covered on the region in which the virtual keyboard is located, a corresponding function of the virtual keyboard can be implemented. For a specific touch detection method, refer to the foregoing method 1700 to method 1900. For example, when the virtual keyboard application detects that the signal value of the capacitance signal is greater than a capacitance threshold, content corresponding to a target button is input. The target button is a button corresponding to a touch location on the virtual keyboard.

The touch accessory may cooperate with the touch module to implement a function related to pressure sensing in a drawing application. For example, a size of a drawn line increases as the touch pressure increases. For another example, a drawn color deepens as the touch pressure increases. This is not limited in this embodiment of this application.

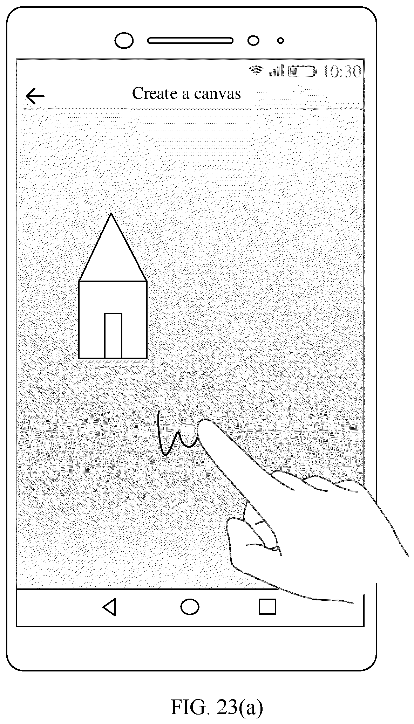

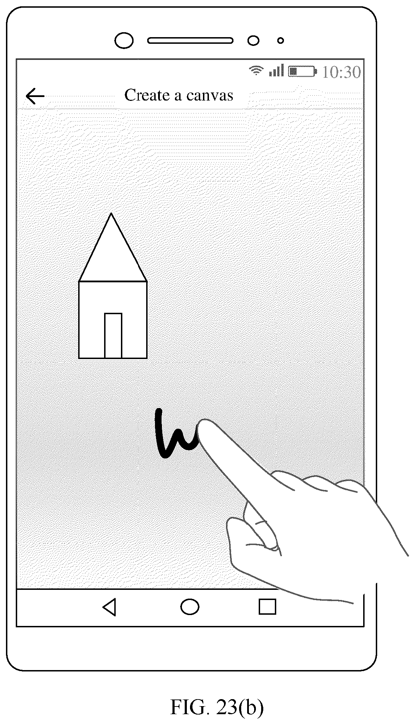

For example, the user may attach the touch accessory to the touch module, and start the drawing application. For example, an input region of the drawing application may be an entire touch region of the touch module. As shown in FIG. 23(a) and FIG. 23(b), the touch accessory may cover an entire touch region of the touch module. When the touch accessory is covered on the region in which the virtual keyboard is located, a function related to pressure sensing in the drawing application can be implemented. For a specific touch detection method, refer to the foregoing method 1700 to method 1900. For example, the drawing application determines the size of the line based on a currently detected signal value of the capacitance signal and a correspondence between a signal value of a preset capacitance signal and a size of a preset line. For example, larger touch pressure indicates a larger signal value of the capacitance signal and a larger size of the line. FIG. 23(a) and FIG. 23(b) respectively show lines under different touch pressure. Touch pressure in FIG. 23(a) is less than touch pressure in FIG. 23(b).

In a possible implementation, the touch accessory in this embodiment of this application may be an accessory related to a stylus. The user may perform a touch operation on the touch module of the electronic device via the stylus.

For example, the touch accessory may be a cover of a stylus, a nib of a stylus, or a stylus. The nib of the stylus may be connected to a body of the stylus. A connection manner may be a detachable connection manner, or may be a non-detachable connection manner. The cover of the stylus is detachably connected to the stylus. The stylus may be assembled inside the cover of the stylus. Alternatively, the cover of the stylus may be a nib cover. The nib cover may cover the outside of the nib of the stylus.

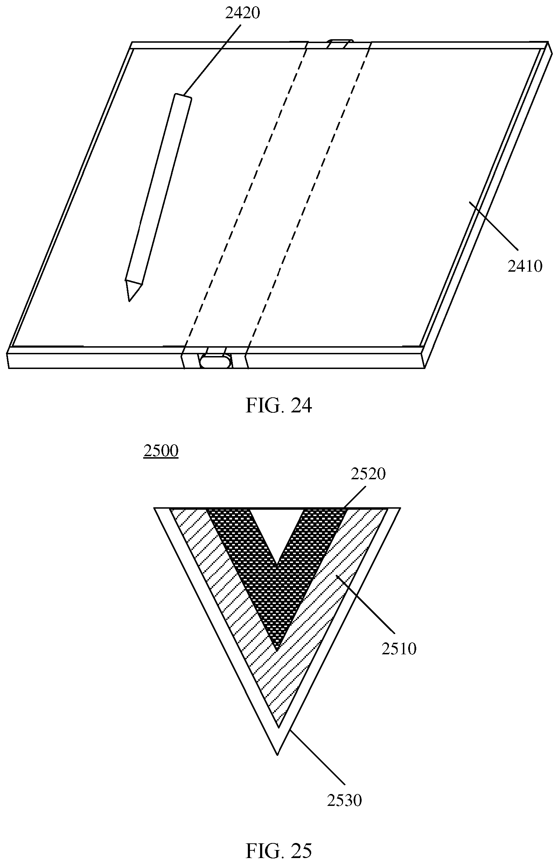

FIG. 24 is a diagram of a usage scenario of a touch accessory according to an embodiment of this application. As shown in FIG. 24, an electronic device may be a mobile phone, and a touch apparatus 2410 may be a touchscreen 2410. A touch accessory 2420 may be a stylus 2420. The stylus 2420 may be configured to perform a touch operation.

It should be understood that FIG. 24 is merely an example, and constitutes no limitation on this embodiment of this application. For example, the electronic device in FIG. 24 may alternatively be another electronic device, for example, a notebook computer. For another example, the touch apparatus in FIG. 24 may alternatively be another touch apparatus, for example, a touchpad.

FIG. 25 is a diagram of a structure of a touch accessory according to an embodiment of this application.

As shown in FIG. 25, the touch accessory 2500 includes a pressure sensing layer 2510 and a fourth substrate 2520.

For example, the touch accessory 2500 may be a nib of a stylus. A material of the fourth substrate 2520 may be a material of the nib of the stylus.

It should be understood that the nib of the stylus is merely used as an example in FIG. 25. For example, the touch accessory is a cover of a stylus. A material of the fourth substrate may be a material of the cover, for example, TPU or silicone.

Optionally, the touch accessory 2500 may further include a fifth substrate 2530. The fifth substrate 2530 is located on a side that is of the pressure sensing layer 2510 and that is away from the fourth substrate 2520. For specific descriptions of the fifth substrate 2530, refer to the foregoing related descriptions of the second substrate 240. To avoid repetition, details are not described herein again.

The touch accessory related to the stylus in this embodiment of this application may cooperate with a touch module to implement a function related to touch pressure. When the touch module of the electronic device does not have a function of detecting touch pressure, the stylus provided in this embodiment of this application may be used to perform a touch operation. When a user applies different touch pressure, signal values of capacitance signals output by the touch module are different. An APP or the electronic device may implement a function related to the touch pressure by detecting a signal value of a capacitance signal.

The following describes an example of an application scenario of the accessory related to the stylus in this embodiment of this application. For example, the accessory related to the stylus may be a nib of the stylus. The user may connect the nib of the stylus to a stylus rod of the stylus in this embodiment of this application. For another example, the accessory related to the stylus may be a cover of the stylus. The user may wrap the stylus with the cover of the stylus in this embodiment of this application.

The accessory related to the stylus may cooperate with the touch module to implement a function related to pressure sensing in a virtual keyboard application.

For example, the user may start the application used to implement a virtual keyboard. The stylus in this embodiment of this application performs a touch operation in a region of the virtual keyboard, so that a corresponding function of the virtual keyboard can be implemented. For a specific touch detection method, refer to the foregoing method 1700 to method 1900. For example, when the virtual keyboard application detects that the signal value of the capacitance signal is greater than a capacitance threshold, content corresponding to a target button is input. The target button is a button corresponding to a touch location on the virtual keyboard.

The touch accessory may cooperate with the touch module to implement a function related to pressure sensing in a drawing application. For example, a size of a drawn line increases as the touch pressure increases. For another example, a drawn color deepens as the touch pressure increases. This is not limited in this embodiment of this application.

For example, the user may start the application used for drawing. The stylus in this embodiment of this application performs a touch operation in the virtual keyboard region, so that a function related to pressure sensing in the drawing application can be implemented. For related descriptions, refer to FIG. 23(a) and FIG. 23(b). Details are not described herein.

An embodiment of this application further provides an electronic device. The electronic device includes the touch module in embodiments of this application.

For example, the electronic device may include a tablet computer, a mobile phone, a notebook computer, a watch, or the like. For example, the touch module may be a touchscreen, a touchpad, or the like.

For example, the electronic device may include a headset, glasses, or the like. For example, the touch module may be a touch button or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A touch module, comprising a touch capacitive layer and a pressure sensing layer, wherein the touch capacitive layer and the pressure sensing layer are disposed opposite to each other, the touch capacitive layer is configured to output a capacitance signal, the capacitance signal is used to determine a touch location of a touch operation, the pressure sensing layer is configured to change under an action of touch pressure, and a signal value of the capacitance signal is related to a variation of the pressure sensing layer.

2. The touch module according to claim 1, wherein the pressure sensing layer comprises at least one of the following: a first pressure sensing layer or a second pressure sensing layer, wherein the first pressure sensing layer is configured to change a thickness under the action of the touch pressure, or the second pressure sensing layer is configured to change a resistance value under the action of the touch pressure.

3. The touch module according to claim 2, wherein the pressure sensing layer is closer to the touch operation than the touch capacitive layer.

4. The touch module according to claim 3, wherein the touch module further comprises a first substrate, and the first substrate is located between the touch capacitive layer and the pressure sensing layer.

5. The touch module according to claim 4, wherein the pressure sensing layer further comprises a first conducting layer, and the first conducting layer is located on a side that is of the first pressure sensing layer and that is close to the first substrate.

6. The touch module according to any one of claims 3 to 5, wherein the touch module further comprises a second substrate, the second substrate is located on a side that is of the pressure sensing layer and that is away from the touch capacitive layer, and a side that is of the second substrate and that is away from the pressure sensing layer is configured to be in contact with the touch operation.

7. The touch module according to claim 2, wherein the touch module further comprises a third substrate, the third substrate is located on a side that is of the touch capacitive layer and that is away from the pressure sensing layer, a side that is of the third substrate and that is away from the touch capacitive layer is configured to be in contact with the touch operation, the pressure sensing layer further comprises a second conducting layer, and the second conducting layer is located on a side that is of the pressure sensing layer and that is away from the touch capacitive layer.

8. The touch module according to any one of claims 2 to 7, wherein a Young's modulus of the first pressure sensing layer is less than or equal to 100 MPa.

9. The touch module according to any one of claims 2 to 8, wherein a side that is of the first pressure sensing layer and that is away from the touch operation comprises a plurality of protrusion structures protruding toward a direction opposite to the first pressure sensing layer.

10. The touch module according to claim 9, wherein a bottom area of a side that is of the protrusion structure and that is away from the first pressure sensing layer is less than a bottom area of a side that is of the protrusion structure and that is close to the first pressure sensing layer.

11. The touch module according to claim 9 or 10, wherein the plurality of protrusion structures are spaced from each other.

12. The touch module according to any one of claims 9 to 11, wherein the plurality of protrusion structures are a same protrusion structure.

13. The touch module according to any one of claims 2 to 12, wherein the first pressure sensing layer comprises a plurality of hollow structures.

14. The touch module according to any one of claims 2 to 13, wherein a material of the second pressure sensing layer is a composite material having conductive particles, and a concentration of the conductive particles is greater than a permeation threshold.

15. An electronic device, comprising the touch module according to any one of claims 1 to 14.

16. A touch accessory, used in a touch module, wherein the touch module is configured to output a capacitance signal, the capacitance signal is used to determine a touch location of a touch operation, the touch accessory comprises a pressure sensing layer and a fourth substrate, the pressure sensing layer and the fourth substrate are disposed opposite to each other, the pressure sensing layer is configured to change under an action of touch pressure, and a signal value of the capacitance signal is related to a variation of the pressure sensing layer.

17. The touch accessory according to claim 16, wherein the pressure sensing layer comprises at least one of the following: a first pressure sensing layer or a second pressure sensing layer, wherein the first pressure sensing layer is configured to change a thickness under the action of the touch pressure, or the second pressure sensing layer is configured to change a resistance value under the action of the touch pressure.

18. The touch accessory according to claim 17, wherein the pressure sensing layer further comprises a first conducting layer, the first conducting layer is located on a side that is of the first pressure sensing layer and that is close to the fourth substrate, and the first pressure sensing layer is closer to the touch operation than the first conducting layer.

19. The touch accessory according to claim 17 or 18, wherein a Young's modulus of the first pressure sensing layer is less than or equal to 100 MPa.

20. The touch accessory according to any one of claims 17 to 19, wherein a side that is of the first pressure sensing layer and that is close to the touch module comprises a plurality of protrusion structures protruding toward the touch module.

21. The touch accessory according to claim 20, wherein a bottom area of a side that is of the protrusion structure and that faces the touch module is less than a bottom area of a side that is of the protrusion structure and that is away from the touch module.

22. The touch accessory according to claim 20 or 21, wherein the plurality of protrusion structures are spaced from each other.

23. The touch accessory according to any one of claims 20 to 22, wherein the plurality of protrusion structures are a same protrusion structure.

24. The touch accessory according to any one of claims 17 to 23, wherein the first pressure sensing layer comprises a plurality of hollow structures.

25. The touch accessory according to any one of claims 17 to 24, wherein a material of the second pressure sensing layer is a composite material having conductive particles, and a concentration of the conductive particles is greater than a permeation threshold.

26. The touch accessory according to any one of claims 16 to 25, wherein the touch accessory further comprises a fifth substrate, and the fifth substrate is located on a side that is of the pressure sensing layer and that is away from the fourth substrate.

27. The touch accessory according to any one of claims 16 to 26, wherein the touch accessory comprises any one of the following: a touch screen protector, a stylus, a nib of a stylus, or a cover of a stylus.

28. A touch detection method, comprising:
obtaining a capacitance signal output by a touch module, wherein the capacitance signal is used to determine a touch location of a touch operation, and a signal value of the capacitance signal is related to touch pressure of the touch operation; and
sending, based on the signal value of the capacitance signal, an instruction corresponding to the touch operation.

29. The method according to claim 28, wherein the determining, based on the signal value of the capacitance signal, an instruction corresponding to the touch operation comprises:
sending, based on the signal value of the capacitance signal and a correspondence between a plurality of ranges of a signal value of a preset capacitance signal and preset instructions, the instruction corresponding to the touch operation.

30. The method according to claim 28, wherein the capacitance signal comprises a first capacitance signal,
when a signal value of the first capacitance signal falls within a first range, the instruction corresponding to the touch operation is a first instruction corresponding to the first range; or
when a signal value of the first capacitance signal falls within a second range, the instruction corresponding to the touch operation is a second instruction corresponding to the second range, wherein
the first range and the second range belong to a plurality of ranges, the first range is different from the second range, the first instruction and the second instruction belong to preset instructions, and the first instruction is different from the second instruction.

31. The method according to any one of claims 28 to 30, wherein the touch module comprises a touch capacitive layer and a pressure sensing layer, the touch capacitive layer and the pressure sensing layer are disposed opposite to each other, the touch capacitive layer is configured to output the capacitance signal, the pressure sensing layer is configured to change under an action of the touch pressure, and the signal value of the capacitance signal is related to a variation of the pressure sensing layer.

32. The method according to claim 31, wherein the pressure sensing layer comprises at least one of the following: a first pressure sensing layer or a second pressure sensing layer, wherein the first pressure sensing layer is configured to change a thickness under the action of the touch pressure, or the second pressure sensing layer is configured to change a resistance value under the action of the touch pressure.

33. The method according to claim 32, wherein the pressure sensing layer is closer to the touch operation than the touch capacitive layer.

34. The method according to claim 33, wherein the touch module further comprises a first substrate, the first substrate is located between the touch capacitive layer and the pressure sensing layer, the pressure sensing layer further comprises a first conducting layer, and the first conducting layer is located on a side that is of the first pressure sensing layer and that is close to the first substrate.

35. The method according to claim 32, wherein the pressure sensing layer further comprises a second conducting layer, the second conducting layer is located on a side that is of the pressure sensing layer and that is away from the touch capacitive layer, the touch module further comprises a third substrate, the third substrate is located on a side that is of the touch capacitive layer and that is away from the pressure sensing layer, and a side that is of the third substrate and that is away from the touch capacitive layer is configured to be in contact with the touch operation.

36. A computer-readable storage medium, comprising a computer program instruction, wherein when the computer program instruction is executed by a computing device, the computing device performs the method according to any one of claims 28 to 35.

37. A computer program product comprising instructions, wherein when the instructions are run by a computing device, the computing device is enabled to perform the method according to any one of claims 28 to 35.
